(19) Europäisches Patentamt / European Patent Office / Office européen des brevets

(11) **EP 3 129 682 B1**

(12) **EUROPÄISCHE PATENTSCHRIFT**

(45) Veröffentlichungstag und Bekanntmachung des Hinweises auf die Patenterteilung:
**22.06.2022   Patentblatt 2022/25**

(21) Anmeldenummer: **15741937.5**

(22) Anmeldetag: **07.04.2015**

(51) Internationale Patentklassifikation (IPC):
**F16H 61/02** (2006.01)     **F16H 61/68** (2006.01)
**G01M 13/02** (2019.01)

(52) Gemeinsame Patentklassifikation (CPC):
**F16H 61/0213; F16H 61/68; G01M 13/022;**
F16H 59/48; F16H 2061/0068

(86) Internationale Anmeldenummer:
**PCT/EP2015/057516**

(87) Internationale Veröffentlichungsnummer:
**WO 2015/155184 (15.10.2015 Gazette 2015/41)**

(54) **VERFAHREN ZUR BEWERTUNG DES SCHALTVERHALTENS EINES KRAFTFAHRZEUGGETRIEBES**

METHOD FOR EVALUATING THE SHIFTING BEHAVIOUR OF A MOTOR VEHICLE TRANSMISSION

PROCÉDÉ POUR ÉVALUER LE COMPORTEMENT DU CHANGEMENT DE VITESSES D'UNE BOÎTE DE VITESSES DE VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2014   DE 102014005398**

(43) Veröffentlichungstag der Anmeldung:
**15.02.2017   Patentblatt 2017/07**

(73) Patentinhaber: **AVL List GmbH**
**8020 Graz (AT)**

(72) Erfinder:
• **PFLUEGER, Falko**
**A-8045 Stattegg-Hohenberg (AT)**
• **SCHATZ, Patrick**
**A-9461 Prebl (AT)**
• **WOHLFAHRT, Martin**
**A-8010 Graz (AT)**
• **BOGNER, Erik**
**A-8046 Graz (AT)**
• **MUELLER-WERTH, Thomas Frank**
**Michigan 48189 (AT)**

(74) Vertreter: **Hahner, Ralph et al**
**Wallinger Ricker Schlotter Tostmann**
**Patent- und Rechtsanwälte Partnerschaft mbB**
**Zweibrückenstraße 5-7**
**80331 München (DE)**

(56) Entgegenhaltungen:
**EP-A2- 0 744 565          DE-A1- 10 042 146**
**DE-B3-102007 006 616**

**Beschreibung**

Die vorliegende Erfindung betrifft ein Verfahren zur Bewertung oder Optimierung des Schaltverhaltens eines Getriebes, insbesondere eines Kraftfahrzeuggetriebes. Die Erfindung wird im Folgenden beispielhaft im Zusammenhang mit einem Verfahren zur Bewertung des Schaltverhaltens eines automatisch oder automatisiert schaltenden Kraftfahrzeuggetriebes beschrieben.

An eine technische Qualität eines Kraftfahrzeugs werden heute erheblich höhere Anforderungen gestellt, als es noch vor 10 oder 20 Jahren üblich war. Dies betrifft zum einen die Verbrauchs- und Emissionswerte, für die der Gesetzgeber heute und in Zukunft enge Grenzen setzt. Auf der anderen Seite erwartet der Käufer des Fahrzeugs einen hohen Fahrkomfort und insbesondere ein günstiges NVH-Verhalten (Noise, Vibration, Harshness; zu Deutsch: Geräusch, Vibration, Rauheit). Die Summe dieser Anforderung macht es erforderlich, die einzelnen Komponenten eines Kraftfahrzeugs schon im frühen Stadium der Entwicklung optimal aufeinander abzustimmen.

Um das Kraftfahrzeug insgesamt sowohl auf der Straße als auch während der Entwicklung auf dem Prüfstand beurteilen zu können, hat die Anmelderin ein Verfahren vorgeschlagen, das z. B. in der EP 0 846 945 B1 beschrieben ist. Dieses Verfahren läuft in zwei Schritten ab: In einem ersten Schritt wird das Fahrzeug auf der Straße bewegt. Dabei werden für eine Vielzahl möglicher Fahrmanöver sogenannte Fahrzustände definiert, bei deren Auftreten motorspezifische Größen wie Motordrehzahl, Drosselklappen- bzw. Gaspedalstellung, Saugrohrunterdruck, Kühlmitteltemperatur, Zündzeitpunkt, Einspritzmenge, Lambda-Wert, Abgasrückführrate und Abgastemperatur und fahrzeugbezogene Werte, wie Fahrzeuggeschwindigkeit und Fahrzeuglängsbeschleunigung, ermittelt werden. Die gemessenen Werte werden mit Beurteilungen verglichen, die erfahrene Testfahrer für das Verhalten dieses Fahrzeuges bei den entsprechenden Fahrzuständen erteilen. Diese erlaubt es zum einen, aus den Messwerten eine Bewertungsgröße für das Fahrzeugverhalten zu berechnen, welches das subjektive Empfinden eines Fahrers wiedergibt. Zum anderen ist es möglich, aus den gewonnenen Daten ein Simulationsmodell zu erstellen, bei dem der Einfluss verschiedener Parameter auf das subjektive Empfinden des Fahrers berechnet werden kann. Zieht man beispielsweise entsprechende Daten eines Referenzfahrzeugs heran, ist es möglich, schon in einem sehr frühen Stadium der Entwicklung Aussagen über das Fahrverhalten eines in der Entwicklung befindlichen Fahrzeugs zu machen.

Während sich die EP 0 846 945 vor allem mit dem Zusammenwirken von Motor und Fahrzeug befasst, kommt seit einiger Zeit der Gestaltung des Fahrzeuggetriebes höhere Aufmerksamkeit zu. Es ist früher allgemein akzeptiert worden, dass Fahrzeuge, die mit einem Automatikgetriebe ausgestattet sind, in der Regel einen halben oder einen ganzen Liter mehr Kraftstoff auf 100 km benötigen, als das gleiche Fahrzeug mit handgeschaltetem Getriebe. Ein derartiger Mehrverbrauch ist heute nicht mehr zeitgemäß. Um den Verbrauch zu senken, werden heute zunehmend Automatikgetriebe eingesetzt, die statt der früher üblichen drei, vier oder fünf Gängen acht oder mehr Gangstufen aufweisen.

Während ein Fahrzeughersteller früher im Wesentlichen die Wahl zwischen einem handgeschalteten und einem Automatikgetriebe mit Drehmomentwandler hatte, stehen heute mit dem automatisierten Schaltgetriebe und mit dem Doppelkupplungsgetriebe weitere Getriebebauarten zur Verfügung. Das Problem, welches Getriebe für ein Auto ausgewählt werden soll und wie dieses Getriebe im Einzelnen abzustimmen ist, ist deshalb heute sehr viel komplexer geworden.

Aus der DE 100 42 146 ist ein Verfahren zur Ermittlung wenigstens einer Kenngröße zur Bewertung und Optimieren einer Getriebeeinrichtung bekannt.

Es ist die Aufgabe der vorliegenden Erfindung, ein Verfahren zur Verfügung zu stellen, das die Bewertung oder die Optimierung von Getrieben sowohl am realen Fahrzeug am Prüfstand als auch im Wege der Simulation ermöglicht. Das wird erfindungsgemäß durch die Lehre des unabhängigen Anspruchs erreicht. Zu bevorzugende Weiterbildungen der Erfindung sind Gegenstand der Unteransprüche.

Das Verfahren zur Ermittlung wenigstens einer Kenngröße zur Bewertung oder Optimierung einer zwischen einem ersten und wenigstens einem zweiten Drehzahlverhältnis umschaltbaren Getriebeeinrichtung findet vor allem Anwendung für Kraftfahrzeuge. Dabei weist eine zu analysierende Getriebeeinrichtung wenigstens ein Getriebe-Eingangselement und wenigstens ein Getriebe-Ausgangselement auf. Weiter weist das Kraftfahrzeug wenigstens eine Antriebseinheit auf, die mit der Getriebeeinrichtung drehmomentleitend verbindbar ist. Die Antriebseinheit, insbesondere ein Verbrennungs- oder Elektromotor oder eine Kombination wenigstens eines Verbrennungs- mit wenigstens einem Elektromotor, weist eine Vielzahl möglicher Betriebspunkte auf. Diese Betriebspunkte sind wenigstens durch das von der Antriebseinheit abgegebene oder aufgenommene Drehmoment und die Drehzahl charakterisiert. Zur Steuerung der Schaltvorgänge ist ein Getriebesteuergerät vorgesehen. Die Schaltvorgänge des Getriebes werden dadurch in Abhängigkeit des jeweiligen Betriebspunktes und gegebenenfalls in Abhängigkeit von weiteren Parametern gesteuert. Diese weiteren Parameter beschreiben konstante und/oder variable Eigenschaften des Kraftfahrzeuges und dessen Umgebung.

Bei einem erfindungsgemäßen Verfahren werden durch eine vorgegebene, konstante oder veränderbare Sollwertvorgabe Änderungen des Betriebspunktes der Antriebseinheit bewirkt und damit Schaltvorgänge in der Getriebeeinrichtung herbeigeführt. Weiter wird der Verlauf wenigstens eines Ausgangsparameters vor und/oder während und/oder nach dem Schaltvorgang ermittelt. Dabei ist dieser Ausgangsparameter für das Drehzahlverhalten dieses wenigstens einen Getriebe-Ausgangselements charakteristisch. Zur Analyse der Schaltvorgänge wird der Verlauf dieses Ausgangsparameters mit einem vorgegebenen, insbesondere idealen, Ausgangsparameter-Verlauf verglichen. Aus den Abweichungen wird wenigstens eine Kenngröße ermittelt, welche für diese Abweichungen repräsentativ ist.

Im Sinne der Erfindung ist unter einer Getriebeeinrichtung eine Einrichtung zur Anpassung/Wandlung der von der/den Antriebsmaschinen zum Überwinden der Fahrwiderstände bereitgestellten Leistung, d.h. Drehmoment und Drehzahl zu verstehen. Vorzugsweise weist die Getriebeeinrichtung mehrere, miteinander kämmende, insbesondere schaltbare, Zahnradpaare auf, die durch Schalteinrichtungen in den Drehmoment-Übertragungsweg eingegliedert oder ausgegliedert werden Weiter vorzugsweise ist das Drehzahlverhältnis der Getriebeeinrichtung in mehreren, insbesondere durch die von den geometrischen Verhältnissen der Zahnradpaare zueinander vorbestimmten Beziehungen veränderbar.

Im Sinne der Erfindung ist unter dem Drehzahlverhältnis der Getriebeeinrichtung das Verhältnis der Drehzahl des Getriebe-Eingangselements zur Drehzahl des Getriebeausgangselements zu verstehen. Eine Getriebeeinrichtung kann mehrere Getriebeeingangs- und/oder Ausgangswellen aufweisen. In einem solchen Fall ist vorzugsweise aber nicht ausschließlich diejenige GetriebeEingangs-/Ausgangswelle als Getriebe-Eingangs/-Ausgangselement zu verstehen, welche jeweils den größten Teil der Antriebsleistung überträgt.

Im Sinne der Erfindung ist unter einem Betriebspunkt ein Arbeitspunkt der Antriebseinheit zu verstehen, welcher wenigstens durch eine Drehzahl, mit welcher sich eine Abtriebswelle der Antriebseinheit dreht, und ein Drehmoment, welches von dieser Abtriebswelle übertragen wird, beschreibbar ist. Mehrere Betriebspunkte lassen sich zu einer Betriebspunktlinie (Kennlinie) verbinden.

Im Sinne der Erfindung ist unter dem Getriebesteuergerät eine Einrichtung zum Steuern der Schaltvorgänge in der Getriebeeinrichtung zu verstehen. Dabei gibt das Getriebesteuergerät wenigstens den Zeitpunkt vor, an welchem das Drehzahlverhältnis der Getriebeeinrichtung planmäßig verändert wird. Weiter vorzugsweise ist unter einem Getriebesteuergerät, mit einem Rechenwerk, insbesondere einer CPU, eine Speichereinrichtung, insbesondere einem Datenspeicher, und wenigstens jeweils einer, vorzugsweise aber mehrerer, Dateneingangs-und Ausgangs-Leitungen zu verstehen. Das Getriebesteuergerät kann ganz oder teilweise in eine andere Steuereinrichtung integriert sein, aber auch auf mehrere Teile oder Module aufgeteilt sein.

Besonders bevorzugt ist das Getriebesteuergerät mit dem Motorsteuergerät und/oder einem Bussystem wie dem CAN-Bus verbunden.

Im Sinne der Erfindung ist unter der Antriebseinheit die Einheit zu verstehen, welche die zur Überwindung der Fahrwiderstände notwendige Antriebsleistung zur Verfügung stellt. Dabei kann eine Antriebseinheit mehrere Antriebsmotoren aufweisen, insbesondere einen oder mehrere Verbrennungsmotoren und einen oder mehrere Elektromotoren.

Im Sinne der Erfindung sind unter "weiteren Parametern" solche zu verstehen, welche konstante und/oder variable Eigenschaften des Kraftfahrzeugs beschreiben. Unter solchen Parametern sind wenigstens, insbesondere in Bezug auf die Antriebseinheit beziehungsweise einen Verbrennungsmotor, zu verstehen:

- Hubvolumen,
- Zylinderzahl,
- maximales Drehmoment,
- Drehzahl bei Erreichen der maximalen Fahrgeschwindigkeit,
- maximales Drehmoment,
- Drehzahl bei maximalem Drehmoment,
- Leerlaufdrehzahl,
- Höchstdrehzahl,
- Leistungsreduktionsfaktor,
- Art der Verbrennungskraftmaschine, insbesondere Diesel- oder Ottomotor,
- Art der Verbrennungsluftzuführung, Saugmotor, aufgeladener Motor, insbesondere Turbo oder Kompressor.

In Bezug auf das Kraftfahrzeug:

- Masse/Gesamtgewicht,
- Nutzlast,
- Rollwiderstand geschwindigkeitsabhängig/-unabhängig,
- Luftwiderstand,
- Fahrpedalstellung ab welcher ein Beschleunigungssignal an die Antriebseinheit weitergeleitet wird,
- Fahrpedalstellung ab welcher maximal Beschleunigung angenommen wird,
- Art des Fahrzeugs,

- maximal mögliche Beschleunigung,
- maximale Fahrzeuggeschwindigkeit.

In Bezug auf den Antriebsstrang des Kraftfahrzeugs:

- Anzahl der Drehzahlverhältnisse, insbesondere der Gangstufen,
- geometrische Beschreibung der Radreifenkombination, insbesondere Reifendurchmesser,
- Achsübersetzung, insbesondere Differentialübersetzung,
- Zahlenwerte für die einzelnen Drehzahlverhältnisse der Getriebeeinrichtung,
- Verhältnis von Motordrehzahl zu Fahrzeuggeschwindigkeit [1/min / km/h].

In Bezug auf Trägheitsmomente:

- Trägheitsmoment der Radreifenkombination,
- Trägheitsmoment der Antriebseinheit, insbesondere des Verbrennungsmotors.

In Bezug auf das Fahrpedal-Kennfeld:

- Zuordnung einer bestimmten Fahrpedalstellung X zu einem bestimmten Betriebspunkt Y der Antriebseinheit, insbesondere zu einem bestimmten Antriebs-Drehmoment.

Insbesondere werden einige, vorzugsweise alle, der zuvor angeführten Parameter erstellt anhand virtueller Modelle bestimmt.

Insbesondere das Fahrpedal-Kennfeld ist in der Entwicklung von Bedeutung, da dadurch in diesem Kennfeld das Verhalten der Antriebseinheit, insbesondere der Verbrennungskraftmaschine, nachgebildet werden kann, ohne dass diese dazu vorhanden sein muss. Insbesondere das Drehzahl-/Drehmomentverhalten einer Antriebseinheit, insbesondere der Verbrennungskraftmaschine, kann mit Berechnungs- und Simulationsmodellen vorausberechnet werden. Vorzugsweise dieses vorausberechnete Betriebsverhalten der Antriebseinheit wird das Erstellen des Fahrpedal-Kennfelds herangezogen.

Im Sinne der Erfindung ist unter dem Hochschalten zu verstehen, dass von einem Drehzahlverhältnis n in ein Drehzahlverhältnis n+1 gewechselt wird, wobei n die Nummer des aktivierten Drehzahlverhältnisses beziehungsweise des eingelegten Ganges wiedergibt. In einem realen Fahrzeug, beziehungsweise an einer realen Getriebeeinrichtung, entspricht dieser Vorgang beispielsweise einem Wechsel vom 1-ten in den 2-ten Gang usw..

Im Sinne der Erfindung ist unter dem Herunterschalten zu verstehen, dass von einem Drehzahlverhältnis n+1 in ein Drehzahlverhältnis n gewechselt wird, wobei n die Nummer des aktivierten Drehzahlverhältnisses beziehungsweise des eingelegten Ganges wiedergibt. In einem realen Fahrzeug, beziehungsweise an einer realen Getriebeeinrichtung, entspricht dieser Vorgang einem Wechsel vom 3-ten in den 2-ten Gang usw..

Weiter sind unter derartigen Parametern auch die Schaltkennlinien, insbesondere die Hoch-Schaltkennlinie oder Hoch-Schaltkennlinie beziehungsweise das Hoch-Schaltkennfeld (Wechsel Drehzahlverhältnis n zu Drehzahlverhältnis n+1; insbesondere Gangwechsel vom 1-ten in den 2-ten Gang usw.), zu verstehen. Dabei werden die Schaltkennlinien insbesondere für jeden einzelnen Gangwechsel (k = Anzahl der vorhandenen Drehzahlverhältnisse) vorzugsweise in Bezug auf die Stellung des Fahrpedals angegeben. Für eine Getriebeeinrichtung mit k = 8 Drehzahlverhältnissen (Gängen), ergeben sich (k-1) = 7, diskrete Gangwechselkennlinien (1-2, 2-3, 3-4, 4-5, 5-6, 6-7, 7-8). Für Getriebeeinrichtungen mit mehr oder weniger Drehzahlverhältnissen ist dies entsprechend übertragbar. Für jede Fahrpedalstellung wird in Bezug auf einen bestimmten eingelegten Gang festgelegt, bei welcher Fahrzeuggeschwindigkeit die Hochschaltung durch das Getriebesteuergerät imitiert wird. Vorzugsweise gestaltet man durch diese Festlegung in Form eines dreidimensionaler Datenpunkts (Gangwechsel, Fahrpedalstellung, Zeitverzögerung) und einer Vielzahl dieser Datenpunkte ein Kennfeld mit den Schaltungskennlinien. Im Sinne dieser Erfindung werden die Begriffe Drehzahlverhältnis, Schaltstufe und Gang im Wesentlichen gleichlautend verwendet. Unter der Formulierung, dass ein Drehzahlverhältnis aktiviert ist, ist zu verstehen, dass eine Antriebsleistung von der Antriebseinheit über die Getriebeeinrichtung mit diesem Drehzahlverhältnis übertragen wird oder dass durch die Getriebeeinrichtung auf die Antriebseinheit eine Antriebsleistung mit diesem Drehzahlverhältnis übertragen wird.

Im Sinne der Erfindung sind Herunter-Schaltkennlinien oder Rück-Schaltkennlinien solche Linien in einem Kennfeld die vorgeben, bei welcher Drehzahl von einem Drehzahlverhältnis n+1 in ein Drehzahlverhältnis n gewechselt wird, beispielsweise also für einen Gangwechsel vom 5-ten in den 4-ten oder vom 4-ten in den 3-ten Gang, usw..

Das erfindungsgemäße Verfahren kann so gestaltet sein, dass einer der oben genannten Parameter die zeitliche Verzögerung von der Ausgabe eines Signals des Getriebesteuergeräts bis zum Beginn des Gangwechsels wiedergibt. Insbesondere wird diese Verzögerung in Form eines Kennfeldes wiedergegeben. Auch wird vorzugsweise für jeden Schaltvorgang (Wechsel des Drehzahlverhältnisses) eine eigene Kennlinie abgelegt, besonders vorzugsweise bilden mehrere oder alle dieser Kennlinien das Kennfeld für die Zeitverzögerung. Vorzugsweise wird diese Zeitverzögerung in Abhängigkeit von der Fahrpedalstellung angegeben. Bevorzugt ergibt sich so ein dreidimensionaler Datenpunkt (Gangwechsel, Fahrpedalstellung, Zeitverzögerung) und eine Vielzahl dieser Datenpunkte beschreiben das Kennfeld für die zeitliche Verzögerung des Schaltungsvorgangs.

In einer zu bevorzugenden Ausführungsform ist das Verfahren so gestaltet, dass die Schaltungsdauer als einer der oben genannten Parameter verwendet wird. Dabei ist unter der Schaltungsdauer die Zeitspanne zu verstehen, welche das Ausführen eines Gangwechsels in der Getriebeeinrichtung benötigt. Vorzugsweise ist auch die Schaltungsdauer in Form eines Kennfeldes abgespeichert. Auch hier ist es bevorzugt, dass für jeden Schaltvorgang (Wechsel des Drehzahlverhältnisses) eine eigene Kennlinie abgelegt ist. Vorzugsweise bilden mehrere oder alle dieser Kennlinien das Kennfeld für die Schaltungsdauer. Vorzugsweise wird diese Schaltungsdauer in Abhängigkeit von der Fahrpedalstellung angegeben. Bevorzugt ergibt sich so ein dreidimensionaler Datenpunkt (Gangwechsel, Fahrpedalstellung, Schaltungsdauer) und eine Vielzahl dieser Datenpunkte beschreibt das Kennfeld für die Schaltungsdauer.

Vorzugsweise sind die zuvor genannten Kennfelder bzw. Datenpunkte nicht nur für die Hochschaltungsvorgänge, also insbesondere einen Gangwechsel von n nach n+1, sondern auch für das Herunterschalten, also von n nach n-1, in der gleichen Weise abgelegt und werden für die Analyse, Bewertung und/oder die Optimierung der Getriebeeinrichtung herangezogen.

In einer Ausführungsform ist das Verfahren so gestaltet, dass als einer der zuvor genannten Parameter der spezifische Kraftstoffverbrauch (englisch, Brake Specific Fuel Consumption (BSFC)), in Form wenigstens eines, bevorzugt einer Vielzahl, von Datenpunkten und insbesondere als Kennfeld verwendet wird. Dabei setzt der spezifische Kraftstoffverbrauch den verbrauchten Kraftstoff, insbesondere in Gramm oder Liter, mit der daraus zur Verfügung gestellten Energiemenge, insbesondere in Kilowattstunden, in Bezug mit der Drehzahl der Antriebseinheit und dem von diesem abgegebenen Drehmoment. Vorzugsweise können dabei auch negative Drehmomente der Antriebseinheit, daraus folgt bei gleichbleibender Drehrichtung eine Umkehrung des Leistungsflusses, berücksichtigt werden. Ein negatives Antriebsdrehmoment kann dabei mit einem Wert von 0 für den Kraftstoffverbrauch belegt werden, dies wäre im Fall der sogenannten Schubabschaltung einer Verbrennungskraftmaschine zutreffend oder es kann für den rekuperativen Betrieb, insbesondere eines Elektromotors, ein Zahlenwert für Energierückgewinnungspotentiale abgelegt sein. Vorzugsweise wird der spezifische Kraftstoffverbrauch als dreidimensionaler Datenpunkt oder als eine Vielzahl von dreidimensionalen Datenpunkten verwendet (Drehmoment der Antriebseinheit, Drehzahl der Antriebseinheit, Kraftstoffverbrauch pro Energieeinheit).

In einer bevorzugten Ausführungsform wird der Kennwert für das erfindungsgemäße Verfahren aus einem ersten, sogenannten Basiswert, und einem zweiten, sogenannten Anpassungsfaktor, berechnet. Vorzugsweise genügt der Kennwert der Berechnungsvorschrift:

$$DR_{final} = DR_{base} + (10 - DR_{base}) \cdot adjust_{factor}$$

In der oben genannten Berechnungsvorschrift stellt $DR_{final}$ die ermittelte Kenngröße zur Bewertung dar. $DR_{base}$ stellt eine Kennzahl zwischen den Werten 1 und 10 für eine zu analysierende Eigenschaft der Getriebeeinrichtung dar. Untersuchungen haben gezeigt, dass für einige Kenngrößen eine Anpassung dieser über den Wertebereich für welchen diese bestimmt werden von Vorteil ist. Der "$adjust_{factor}$" (Anpassungsfaktor) in obiger Rechenvorschrift dient zur Anpassung der Berechnungen. Insbesondere durch diesen Anpassungsfaktor ist es möglich, unterschiedliche Kenngrößen für eine Gesamtbewertung unterschiedlich zu gewichten, insbesondere dadurch wird das Verfahren zur Ermittlung einer Kenngröße verbessert.

In einer ersten Alternative der Erfindung wird zur Ermittlung eines Kennwerts (Kennwert für Hochschalt-Drehzahlverhalten) wenigstens die Drehzahl der Antriebseinheit oder vorzugsweise die Drehzahl des Getriebeeingangselements vor dem Hoch- oder Herunter-Schaltvorgang und nach diesem Schaltvorgang erfasst und bewertet. Vorzugsweise wird diese Drehzahl unmittelbar vor und unmittelbar nach dem Schaltvorgang überwacht. Dabei bedeutet "unmittelbar vor" dem Schaltvorgang, dass diese Drehzahl wenigstens zu dem Zeitpunkt überwacht wird, wenn der Schaltvorgang planmäßig ausgelöst wird. Weiter vorzugsweise wird diese Drehzahl wenigstens eine Sekunde, bevorzugt 0,25 Sekunden und besonders bevorzugt 0,1 Sekunden, vor dem Schaltvorgang überwacht. Dabei bedeutet "unmittelbar nach" dem Schaltvorgang, dass diese Drehzahl wenigstens zu dem Zeitpunkt überwacht wird, wenn der Schaltvorgang planmäßig abgeschlossen ist. Weiter vorzugsweise wird diese Drehzahl bis zu 0,1 Sekunden, bevorzugt bis zu 0,25 Sekunden und besonders bevorzugt bis zu einer Sekunde, nach dem Schaltvorgang überwacht.

Vorzugsweise wird bei dieser Drehzahlüberwachung die Stellung des Fahrpedals konstant gehalten/vorgegeben. Vorzugsweise werden mehrere Berechnungen mit jeweils einer unterschiedlichen (konstanten) Stellung des Fahrpedals durchgeführt. Weiter vorzugsweise wird zu Beginn der Überwachung die Fahrzeuggeschwindigkeit mit Null vorgegeben (Fahrzeug im Stillstand). Als Ergebnis dieser Vorgaben beschleunigt das Fahrzeug bis zu dem Zeitpunkt, an dem die Antriebsleistung der Antriebseinrichtung der Summe der Fahrwiderstände entspricht. Während dieses Beschleunigungsvorgangs des Fahrzeugs führt die Getriebeeinrichtung, initiiert durch das Getriebesteuergerät, verschiedene diskrete Änderungen des Drehzahlverhältnisses durch (Hochschaltvorgänge). Vorzugsweise wird die Stellung des Fahrpedals so vorgegeben, dass mehrere, vorzugsweise aber wenigstens drei oder bevorzugt mehr als drei, insbesondere vier, fünf, sechs oder sieben Hochschaltvorgänge, durchgeführt werden. Die Anzahl der Hochschaltvorgänge hängt insbesondere von der Fahrzeugkonfiguration und von der Fahrsituation ab. Vorzugsweise wird für die Berechnung dieses Kennwerts die Differenz der Drehzahlen zwischen den Drehzahlen des Getriebeeingangselements des n-ten Drehzahlverhältnisses und des n+1-ten Drehzahlverhältnisses gebildet. Auf diese Art und Weise können unterschiedliche Arten von Drehzahldifferenzen berechnet werden, insbesondere die Differenz der Drehzahlen jeweils zu Beginn, also unmittelbar vor dem Schaltvorgang und die Differenz der Drehzahl jeweils nach Abschluss, also unmittelbar nach dem Schaltvorgang.

Vorzugsweise wird für die Berechnung dieses Kennwerts eine Summation für alle zuvor berechneten Drehzahldifferenzen oder wenigstens für alle gleichartigen (Drehzahl Differenz vor Schaltvorgang oder Drehzahldifferenz nach Schaltvorgang) vorgenommen. Weiter vorzugsweise werden die Drehzahldifferenzen in Bezug zur Anzahl der durchgeführten Schaltungsvorgänge gesetzt. Weiter vorzugsweise wird ein Kennwert für die Drehzahldifferenz bestimmt, welcher folgender Berechnungsvorschrift genügt:

$$\Delta n = \frac{\sum_{i=1}^{s-1}(n_i - n_{i+1})^2}{s}$$

In dieser Rechenvorschrift repräsentiert $n_i$ die zuvor angesprochenen Drehzahlen zur Differenzbildung vor beziehungsweise nach dem Schaltvorgang und s gibt die Anzahl der durchgeführten Schaltvorgänge an.

Der Kennwert $DR_{base}$ wird dann durch Zuordnung der ermittelten Drehzahldifferenz $\Delta n$ zu einem Zahlenwert, vorzugsweise aus einer Zuordnungstabelle, festgelegt. Dabei bedeutet ein niedriger Wert für die Drehzahldifferenz $\Delta n$ ein gutes Schaltverhalten, je größer die Drehzahldifferenz $\Delta n$ ist, umso schlechter ist das Schaltverhalten der Getriebeeinrichtung. Dabei ist "gutes Schaltverhalten" in diesem Zusammenhang so zu verstehen, das ein derartiges Schaltverhalten von vielen Fahrern subjektiv als positiv empfunden wird.

Weil eine Drehzahldifferenz über sämtliche durchgeführte Schaltvorgänge ermittelt wird, kann die Abfolge sämtlicher Schaltvorgänge für eine bestimmte Stellung des Fahrpedals ermittelt werden und so wird ein einfaches Verfahren zur Ermittlung eines Kennwert für Schaltvorgänge bereitgestellt, das zu Kennwerten mit hoher Aussagekraft führt.

In einer bevorzugten Ausführungsform des Verfahrens wird für diesen Kennwert (Kennwert für Hochschalt-Drehzahlverhalten) wenigstens ein, bevorzugt zwei, Anpassungsfaktoren, bestimmt.

Vorzugsweise wird ein erster Anpassungsfaktor auf Basis der durchschnittlichen Drehzahlen bestimmt. Unter der durchschnittlichen Drehzahl ist in diesem Sinn die Drehzahl zu verstehen, welche sich als Mittelwert aller zur Berechnung dieses Kennwertes $DR_{base}$ herangezogenen Drehzahlen ergibt. Dieser erste Anpassungsfaktor wird aus einem Wertebereich ausgewählt, der bei Null beginnt und vorzugsweise bei 1, bevorzugt bei 0,5 und besonders bevorzugt bei 0,3 endet. Weiter vorzugsweise wird einer großen durchschnittlichen Drehzahl ein hoher Anpassungsfaktor zugeordnet. In diesem Sinn ist unter einem hohen Wert der durchschnittlichen Drehzahl eine Drehzahl von vorzugsweise kleiner gleich 15000 1/min, bevorzugt von kleiner gleich 12000 1/min und besonders bevorzugt von kleiner gleich 9000 1/min.

In einer besonders bevorzugten Ausführungsform wird der Anpassungsfaktor anhand der nachfolgenden Tabelle gewählt:

| Drehzahl | Anpassungsfaktor |
|----------|------------------|
| 1000 | 0 |
| 2000 | 0,02 |
| 3000 | 0,05 |
| 4000 | 0,1 |
| 5000 | 0,15 |
| 6000 | 0,2 |
| 7000 | 0,25 |
| 8000 | 0,28 |

(fortgesetzt)

| Drehzahl | Anpassungsfaktor |
|---|---|
| 9000 | 0,3 |

Vorzugsweise wird einer kleinen durchschnittlichen Drehzahl ein kleiner Anpassungsfaktor zugeordnet, vorzugsweise wird einer durchschnittlichen Drehzahl von kleiner 2000 1/min der Anpassungsfaktor 0,02 oder kleiner zugeordnet, bevorzugt wird einer durchschnittlichen Drehzahl von kleiner gleich 1500 1/min ein Anpassungsfaktor von 0,015 oder kleiner zugeordnet und besonders bevorzugt wird einer durchschnittlichen Drehzahl von kleiner gleich 1000 1/min ein Anpassungsfaktor von 0 zugeordnet.

Weiter vorzugsweise werden den ermittelten Drehzahlen zwischen der größten durchschnittlichen und der kleinsten durchschnittlichen Drehzahl Zwischenwerte zwischen dem größten und dem kleinsten Anpassungsfaktor zugeordnet.

Ein weiterer Anpassungsfaktor für die Drehzahldifferenzen wird vorzugsweise auf Basis der kleinsten Fehlerquadrate bestimmt. Vorzugsweise wird dieser zweite Anpassungsfaktor auf Grundlage folgender Zusammenhänge ermittelt:

$$trend = \frac{std(n)}{R^2}$$

$$R^2 = 1 - \frac{SS_{err}}{SS_{tot}}$$

mit

$$SS_{tot} = \sum_i (n_i - \bar{n})^2,$$

$$SS_{err} = \sum_i (n_i - f_i)^2$$

und std: Standard deviation beziehungsweise Standardabweichung

Mit dem erfindungsgemäßen Verfahren ist es möglich, die technische Funktionsweise des Getriebes mit Getriebesteuerung bzw. die technische Funktionsweise einer Kombination aus Antriebseinheit und Getriebe messtechnisch zu erfassen und auf Basis dieser Messwerte eine Bewertung durchzuführen. Das erfindungsgemäße Verfahren eignet sich deshalb, um z. B. verschiedene Getriebebauarten, Getriebesteuerungen oder verschiedene ausgeführte Getriebe miteinander zu vergleichen. Vorzugsweise wird einem Wert "trend" kleiner 250 der Anpassungsfaktor 0,2 zugeordnet, bevorzugt bei einem Wert "trend" kleiner gleich 100 und besonders bevorzugt einem Wert trend gleich 0. Weiter vorzugsweise wird einem Wert "trend" kleiner gleich 6000 ein Anpassungsfaktor von 0,01 zugeordnet, weiter vorzugsweise wird einem Wert "trend" kleiner gleich 5000 ein Anpassungsfaktor von 0,01 zugeordnet und besonders bevorzugt wird einem Wert "trend" gleich 3000 ein Anpassungsfaktor von 0,01 zugeordnet. Vorzugsweise werden den Werten "trend", die zwischen dem großen Wert von "trend" und dem kleinen Wert von "trend" liegen, Zwischenwerte des Anpassungsfaktors zugeordnet.

Vorzugsweise werden für die Berechnung des Kennwertes $DR_{final}$ die beiden zuvor ermittelten Anpassungsfaktoren zum $adjust_{factor}$ addiert. Weiter vorzugsweise ist der addierte Anpassungsfaktor $adjust_{factor}$ kleiner gleich 0,4. Insbesondere durch die Bestimmung eines Kennwertes für die Drehzahldifferenzen in der beschriebenen Art ergibt sich ein besonderes repräsentativer Kennwert und die Getriebeeinrichtung wird dadurch besonders gut beschreibbar.

In einer zweiten Alternative der Erfindung wird für die Zeit bzw. die Zeiten, für die die einzelnen Drehzahlverhältnisse während eines bestimmten Fahrzyklus, insbesondere eines Beschleunigungsvorgangs mit konstanter Stellung des Fahrpedals vorliegen, ein Kennwert (Hochschalte-Gangzeit-Kennwert) berechnet. Weiter vorzugsweise beginnt der Beschleunigungsvorgang bei Fahrzeug Stillstand (Fahrzeuggeschwindigkeit gleich Null) und endet vorzugsweise in dem Zeitpunkt in dem die maximal mögliche Geschwindigkeit bei dieser Stellung des Fahrpedals erreicht ist. Weiter vorzugsweise wird die Zeit, in welcher das erste Drehzahlverhältnis, insbesondere also die erste Schaltstufe oder der erste Gang, aktiviert ist, bei dieser Berechnung nicht berücksichtigt.

Vorzugsweise wird für die Berechnung dieses Kennwerts eine Exponentialfunktion herangezogen und dieser Kennwert auf der Grundlage folgender Zusammenhänge bestimmt:

$$a = \frac{t_2}{\exp b}$$

mit
$t_2$: Zeitspanne, welche das zweite Drehzahlverhältnis aktiviert ist

$$b = \frac{1}{\log(\frac{t_2}{t_{letzter}})}$$

mit
letzter: Zeitspanne, welche das letzte hochgeschaltete Drehzahlverhältnis aktiviert ist

$$y = a \cdot \exp b$$

Daraus lässt sich die Differenzzeit $\Delta t$ mit folgendem Zusammenhang bestimmen:

$$\Delta t = 10 \cdot \sum \frac{abs\ (Zeit, welche\ das\ Drehzahlverh\ddot{a}ltnis\ aktiviert\ ist - y)}{\max(Zeit, welche\ ein\ Drehzahlverh\ddot{a}tlnis\ aktiviert\ ist)}$$

Der Kennwert $DR_{base}$ für die Eigenschaft, wie lange ein Drehzahlverhältnis der Getriebeeinrichtung aktiviert ist, wird auf Grundlage der Basis von $\Delta t$ ermittelt. Dabei ist in obiger Rechenvorschrift der Faktor "10" eine konstante, welche vorzugsweise dazu dient die Ergebnisse für "$\Delta t$" zu skalieren. Vorzugsweise ist die Skalierung mit einem von "10" verschiedenen Faktor vorgesehen, besonders bevorzugt mit "1". Vorzugsweise wird einem großen Wert von $\Delta t$ ein kleiner Kennwert $DR_{base}$ zugeordnet. Vorzugsweise wird einem Wert von $\Delta t$, welcher kleiner ist als 0,6, bevorzugt kleiner als 0,5 und besonders bevorzugt kleiner als 0,3 ein Kennwert $DR_{base}$ gleich Null zugeordnet. Weiter vorzugsweise wird einem Wert von $\Delta t$, der größer ist als 5,6, bevorzugt größer als 10 und besonders bevorzugt größer gleich 100 ein Kennwert $DR_{base}$ von 1 zugeordnet. Weiter vorzugsweise werden Werten von $\Delta t$ zwischen diesem größten und diesem kleinsten Wert, Kennwert $DR_{base}$ zwischen den größten und kleinsten zugeordneten Werten für $DR_{base}$ zugeordnet. In einer besonders bevorzugten Ausführungsform wird der Anpassungsfaktor anhand nachfolgender Tabelle gewählt:

| $\Delta t$ | $DR_{base}$ |
| --- | --- |
| 0.0 | 10 |
| 0.6 | 9 |
| 2.6 | 7.15 |
| 3.5 | 6.4 |
| 4.3 | 5.8 |
| 5.6 | 5 |
| 100.0 | 1 |

Weiter vorzugsweise wird für diesen Kennwert (Hochschalte-Gangzeit-Kennwert), welcher die Eigenschaft der Getriebeeinrichtung beschreibt, wie lange ein Drehzahlverhältnis bzw. die einzelnen Drehzahlverhältnisse bei einem Beschleunigungsvorgang aktiviert sind, ein Anpassungsfaktor berechnet. Vorzugsweise ist dieser Anpassungsfaktor aus einem Bereich gewählt, der größer als Null ist und vorzugsweise kleiner als zwei, bevorzugt kleiner als 1 und besonders bevorzugt kleiner gleich 0,2.

Insbesondere durch die Berechnung eines Kennwerts für die Dauer, wie lange einzelne Drehzahlverhältnisse aktiviert sind, beziehungsweise wie lange ein Gang oder eine Schaltstufe eingelegt ist, wird eine besonders einfache Beschreibung dieser Eigenschaft der Getriebeeinrichtung ermöglicht und ein verbessertes Verfahren zur Bewertung wird bereitgestellt.

In einer nicht zur Erfindung gehörenden Alternative wird ferner ein Kennwert (Hochschalt-Start-Drehzahl-Kennwert) für die Drehzahl der Antriebseinheit zu Beginn des Schaltvorgangs und für eine erwartete Drehzahl der Antriebsdrehzahl berechnet, wobei sich diese erwartete Drehzahl aus der Stellung des Fahrpedals ergibt. Für die Berechnung dieses Kennwerts werden vorzugsweise sowohl die Stellung des Fahrpedals als auch die Drehzahl der Antriebseinheit normalisiert. Weiter vorzugsweise wird dieser Kennwert auf Basis der folgenden Rechenvorschriften bestimmt:

$$pedal_{ref\ norm} = \frac{pedal - pedal_{min}}{pedal_{max} - pedal_{min}}$$

mit

$pedal_{ref\ norm}$: normalisierte Pedalstellung

pedal: aktuelle Pedalstellung (Vorgabewert konstante Pedalstellung)

$pedal_{min}$: Minimumstellung des Fahrpedals, bei welcher das Fahrzeug gerade noch eine positive Beschleunigung erfährt (a größer Null)

$pedal_{max}$: Maximalwert für die Stellung des Fahrpedals (100%)

Die normalisierte Drehzahl des Getriebeeingangselements ($n_{schalt\ ref\ norm}$) ist eine Funktion der Stellung des Fahrpedals (pedal). Die maximal mögliche Drehzahl der Antriebseinheit wird mit $n_{max\ abs}$ angegeben. Vorzugsweise wird diese maximale Drehzahl durch einen voreingestellten Wert des Drehzahlbegrenzers vorgegeben.

Die Drehzahl $n_{min\ abs}$ gibt die niedrigste Drehzahl des Getriebeeingangselements an, bei welcher dieses Drehzahlverhältnis von der Getriebesteuerung beziehungsweise vom Getriebesteuergerät noch angewählt bleibt. Anders ausgedrückt, würde die Drehzahl des Getriebeeingangselements noch weiter sinken, würde vorzugsweise das Getriebesteuergerät einen Wechsel des Drehzahlverhältnisses initiieren.

Anhand der beiden Drehzahlen $n_{max\ abs}$ und $n_{min\ abs}$ ist der Drehzahlbereich, dieser wird mit $n_{bereich\ abs}$ bezeichnet, beschreibbar. Zur Bestimmung des Drehzahlbereichs wird die Drehzahl $n_{min\ abs}$ von der Drehzahl $n_{max\ abs}$ abgezogen.

Die niedrigste Drehzahl, bei welcher eine Schaltung durch die Getriebesteuereinrichtung noch initiierbar ist, wird mit $n_{schalt\ min\ def}$ bezeichnet. Diese Drehzahl ergibt sich aus Randbedingungen definierenden Parametern der Verbrennungskraftmaschine und der Getriebeeinrichtung.

Für die Berechnung dieses Kennwertes (Hochschalt-Start-Drehzahl-Kennwert) wird eine normierte Drehzahldifferenz $\Delta n_{norm}$ bestimmt, diese wird vorzugsweise mit Hilfe folgender Berechnungsvorschriften bestimmt:

$$n_{schalt-ref-abs} = n_{min\ abs} + n_{schalt\ ref\ norm} \cdot n_{bereich\ abs}$$

$$n_{schalt\ abs} = n_{schalt\_start}$$

$$\Delta n_{abs} = n_{schalt\ abs} - n_{schalt-ref-abs}$$

$$\Delta n_{norm} = \frac{\Delta n_{abs}}{n_{bereich\ abs}}$$

Vorzugsweise werden der ermittelten Drehzahldifferenz $\Delta n_{norm}$ Kennwerte $DR_{base}$ zugeordnet.

Weiter vorzugsweise ist die Drehzahl $n_{schalt\ ref\ norm}$ als eine Funktion in Abhängigkeit der Fahrpedalstellung ($pedal_{ref\ norm}$) und zusätzlich von tabellarisch abgelegten Werten vorgebbar. Durch diese Vorgabe kann eine besonders energieeffizienter Betriebsmodus der Getriebeeinrichtung oder ein besonders sportlicher oder komfortabler Betriebsmodus ermittelt werden beziehungsweise können Zielvorgaben des Fahrzeugherstellers erreicht werden.

In einer besonders bevorzugten Ausführungsform werden den ermittelten Drehzahldifferenzen $\Delta n_{norm}$ auf der Grundlage folgender Tabelle Kennwerte $DR_{base}$ zugeordnet:

| $\Delta n_{norm}$ | $DR_{base}$ |
|---|---|
| 0 | 10 |
| 0,035 | 9,5 |
| 0,07 | 8 |
| 0,104 | 7 |
| 0,174 | 6 |
| 0,348 | 5 |
| 0,522 | 4 |
| 0,696 | 3 |
| 0,9 | 2 |

In einer besonders bevorzugten Ausführungsform ist die Drehzahl $n_{schalt\,ref\,norm}$ frei konfigurierbar, so können mit dier Drehzahl unterschiedliche Verhalten vorgegeben werden, vorzugsweise ein Energieeffizienz Modus, ein Sport Modus Vorzugsweise hängt die Drehzahl $n_{schalt\,ref\,norm}$ von der normierten Pedalstellung $pedal_{ref\,norm}$ und von Stützstellen, welche vorzugsweise in tabellarischer Form vorgebbar sind .

In einer bevorzugten Ausführungsform wird für den Kennwert (Hochschalt-Start-Drehzahl-Kennwert), welcher die Drehzahl der Antriebseinheit zu Beginn des Schaltvorgangs und für einen erwarteten Wert der Antriebsdrehzahl ein Anpassungsfaktor, bestimmt. Vorzugsweise ist dieser Anpassungsfaktor aus einem Bereich gewählt, vorzugsweise ist dieser Bereich größer oder gleich Null und weiter vorzugsweise ist dieser Bereich kleiner als 1, bevorzugt kleiner als 0,5 und besonders bevorzugt kleiner gleich 0,3. Vorzugsweise wird zur Bestimmung des Anpassungsfaktors die Drehzahl $n_{schalt\,start}$ des Getriebeeingangselements zu Beginn des Schaltvorgangs herangezogen.

In einer bevorzugten Ausführungsform wird der Kennwert (Hochschalt-Start-Drehzahl-Kennwert) ohne einen weiteren Anpassungsfaktor ermittelt. Vorzugsweise wird in dem Berechnungsverfahren für diesen Kennwert dazu wenigstens die Fahrzeugbeschleunigung vor und/oder nach dem Wechseln des Drehzahlverhältnisses nicht berücksichtigt. Weiter vorzugsweise wird für die unterschiedlichen Drehzahlen, insbesondere im Bereich zwischen 1000 9000 1/min kein Anpassungsfaktor bestimmt. Durch dieses Vorgehen ist es ermöglicht eine Vermischung einzelner Kennwertberechnungen zu vermeiden und besonders aussagekräftige Einzelkennwerte zu ermitteln und dadurch ein verbessertes Bewertungsverfahren zu Verfügung zu stellen.

Vorzugsweise wird kleinen Drehzahlen des Getriebeeingangselements in diesem Sinn ein kleiner Anpassungsfaktor zugeordnet und großen Drehzahlen ein großer Anpassungsfaktor. In diesem Zusammenhang ist unter großen Drehzahlen des Getriebeeingangselement eine Drehzahl von vorzugsweise größer als 5000 1/min, bevorzugt größer als 7500 1/min und besonders bevorzugt von größer als 9000 1/min zu verstehen. Weiter vorzugsweise ist unter einer kleinen Antriebsdrehzahl eine Drehzahl des Getriebeeingangselements von kleiner als 2500 1/min, bevorzugt kleiner als 1500 1/min und besonders bevorzugt von kleiner gleich 1000 1/min.

In einer nicht zur Erfindung gehörenden Alternative wird ein Kennwert (Herunterschalt-Beschleunigungs-Kennwert) für die erreichbare bzw. die ideale Beschleunigung des Fahrzeugs berechnet. In diesem Sinne ist unter dieser ideale Beschleunigung vorzugsweise ein linearer Zusammenhang der Fahrzeugbeschleunigung und der Stellung des Fahrpedals zu verstehen. Insbesondere durch die diskreten Drehzahlverhältnisse, also insbesondere durch die begrenzte Anzahl der vorhandenen Schaltstufen der Getriebeeinrichtung, ergeben sich Abweichungen der real erzielbaren Fahrzeugbeschleunigung bei einer vorgegebenen Pedalstellung von dieser idealen Fahrzeugbeschleunigung. Der Kennwert für die ideale Fahrzeugbeschleunigung des Fahrzeugs beschreibt vorzugsweise den Grad der Abweichung der mit dieser Getriebeeinrichtung erzielbaren realen Fahrzeugbeschleunigung und der idealen Fahrzeugbeschleunigung. Insbesondere durch die Ermittlung dieses Kennwerts ist die Beurteilung der Getriebeeinrichtung auf besonders einfache Weise möglich und damit wird ein verbessertes Verfahren zur Bewertung einer Getriebeeinrichtung und zur Ermittlung eines Kennwerts für die ideale Beschleunigung bereitgestellt.

In einer bevorzugten Ausführungsform kann der Kennwert (Herunterschalt-Beschleunigungs-Kennwert) für die ideale Fahrzeugbeschleunigung anhand nachfolgender Rechenvorschriften bestimmt werden:

$$a_{ref\,norm\,(pedal)} = \frac{pedal - pedal_{min}}{pedal_{max} - pedal_{min}}$$

$$a_{norm} = \frac{a(pedal) - a_{\min ref}}{a_{\max ref} - a_{\min ref}}$$

mit:

$$pedal_{min} \leq pedal \leq pedal_{max}$$

$$Fläche = \frac{\sum_{pedal=pedal_{min}}^{pedal=pedal_{max}} abs\left(a_{ref-norm(pedal)} - a_{norm\ (pedal)}\right)}{pedal_{max} - pedal_{min}}$$

Vorzugsweise ergibt sich für die Funktion $a_{ref\ norm(pedal)}$ eine lineare Funktion (Gerade zwischen 0 und 1).

Vorzugsweise wird diesem berechneten Wert "Fläche" ein Kennwert $DR_{base}$ zugeordnet. Vorzugsweise wird kleinen Werten von "Fläche" ein großer Kennwert zugeordnet und großen berechneten Werten "Fläche" werden kleine Kennwerte zugeordnet. Vorzugsweise ist unter einem kleineren Wert für "Fläche" ein Bereich von Werten zu verstehen, welcher vorzugsweise größer als Null ist, bevorzugt größer als 0,005 und besonders bevorzugt größer oder gleich 0,01, weiter vorzugsweise wird darunter ein Bereich verstanden, der vorzugsweise kleiner ist als 0,05, bevorzugt kleiner als 0,03 und besonders bevorzugt kleiner gleich 0,02. Vorzugsweise ist unter einem großen Wert für "Fläche" ein Bereich von Werten zu verstehen, der vorzugsweise kleiner oder gleich 1 ist und vorzugsweise größer oder gleich 0,5, bevorzugt größer als 0,6 und besonders bevorzugt größer als 0,7.

In einer besonders bevorzugten Ausführungsform wird dem berechneten Wert "Fläche" anhnad nachfolgend dargestellter Tabelle ein Kennwert $DR_{base}$ zugeordnet.

| Fläche | $DR_{base}$ |
|--------|-------------|
| 0,01   | 10          |
| 0,05   | 9,5         |
| 0,1    | 8,3         |
| 0,15   | 7,3         |
| 0,3    | 5,2         |
| 0,5    | 3,6         |
| 1      | 1           |

In einer dritten Variante der Erfindung wird ein Kennwert (Drehzahlverhältnis-Aktiv-Kennwert) für die Aktivierungszeit eines Drehzahlverhältnisses bestimmt. Unter der Aktivierungszeit ist in diesem Zusammenhang die Dauer zu verstehen, ab wann ein Drehzahlverhältnis aktiviert wird, insbesondere ab wann dieses durch das Herunterschalten aktiviert wird (Wechsel von Drehzahlverhältnis n+1 nach n, also z.b. Rückschaltung vom 4-ten in den 3-ten Gang). Die Aktivierungszeit endet mit der nächsten, auf die Herunterschaltung folgenden, Hochschaltung, also dem Wechsel des Drehzahlverhältnisses von n nach n+1 (z.b. Hochschaltung vom 3-ten in den 4-ten Gang). Vorzugsweise wird eine lange Dauer der Aktivierung eines Drehzahlverhältnisses besser bewertet als eine kurze Dauer. Vorzugsweise wird die Aktivierungsdauer bei konstanter Stellung der Fahrpedals ermittelt. Weiter vorzugsweise wird der Kennwert für die Aktivierungsdauer mit Hilfe der nachfolgend dargestellten Rechenvorschriften bestimmt:

$$\Delta v = f(Fahrzeug\ Konfiguration)$$

$$\Delta t(v, pedal) = \frac{\frac{\Delta v}{3,6}}{a(v, pedal)}$$

$$t_{aktiv}(pedal) = \sum_{v=v_{rückschalt(pedal)}}^{v_{hochschalt(pedal)}} \Delta t(v, pedal)$$

Vorzugsweise werden Geschwindigkeiten in diesem Zusammenhang in der Einheit Kilometer pro Stunde [km/h] angegeben und Beschleunigungen in der Einheit Meter pro Sekunde zum Quadrat [m/s$^2$]. Vorzugsweise werden großen Werten für $t_{aktiv(pedal)}$ große Kennwerte $DR_{base}$ zugeordnet und kleinen Werten von $t_{aktiv(pedal)}$ kleine Kennwerte $DR_{base}$. Vorzugsweise ist unter großen Werten für $t_{aktiv(pdal)}$ Werte aus einem Bereich zu verstehen, welcher vorzugsweise größer als 2,5 Sekunden ist, bevorzugt größer gleich 3 Sekunden und besonders bevorzugt größer gleich 5 Sekunden und weiter vorzugsweise sind kleine Werte für $t_{aktiv(pedal)}$ aus einem Bereich der kleiner ist als 0,5 Sekunden, bevorzugt kleiner als 0,2 Sekunden und besonders bevorzugt kleiner oder gleich 0,1 Sekunden.

In einer besonders bevorzugten Ausführungsform wird dem berechneten Wert $t_{aktiv(pedal)}$ anhand nachfolgend dargestellter Tabelle ein Kennwert $DR_{base}$ zugeordnet.

| $t_{aktiv(pedal)}$ | $DR_{base}$ |
|---|---|
| 0,1 | 1 |
| 0,5 | 5 |
| 1,0 | 6,2 |
| 1,7 | 7,5 |
| 2,0 | 8,0 |
| 2,5 | 9,0 |
| 3,0 | 10 |

In einer bevorzugten Ausführungsform wird wenigstens ein Kennwert für das Beschleunigungspotential des Fahrzeugs bestimmt. Vorzugsweise bezieht sich das Beschleunigungspotential auf Beschleunigungen des Fahrzeugs aus niedrigen Drehzahlen der Antriebseinrichtung. Im Sinne dieser Erfindung, insbesondere des Beschleunigungspotentials, ist unter einer niedrigen Antriebsdrehzahl eine Antriebsdrehzahl zu verstehen, welche vorzugsweise 75 % oder weniger der maximalen Drehzahl der Antriebseinrichtung, bevorzugt 50 % oder weniger und besonders bevorzugt 30 % oder weniger dieser Drehzahl beträgt. Weiter vorzugsweise beginnt eine Beschleunigung zur Bewertung des Beschleunigungspotentials wenigstens in einem dieser Bereiche, weiter vorzugsweise läuft eine solche Beschleunigung vollständig ein diesem Bereich ab.

Im Sinne der Erfindung ist unter dem Beschleunigungspotential die Eigenschaft des Fahrzeugs zu verstehen, eine Beschleunigung, bei vorgegebener, konstanter Fahrpedalstellung durchzuführen, ohne dass das Drehzahlverhältnis in der Getriebeeinrichtung verändert wird. Vorzugsweise beginnt diese Beschleunigung wenigstens bei einer niedrigen Drehzahl. Vorzugsweise ist darunter eine Art Hysterese zu für die Schaltvorgänge zu verstehen, so dass ein zu häufiges Wechseln der Drehzahlverhältnisse vermieden oder verringert wird.

Insbesondere wird ein solcher Kennwert für das Beschleunigungspotential ohne Herunterschaltung (Beschleunigungspotential-vor Herunterschalten-Kennwert) berechnet. Insbesondere durch das Herunterschalten der Getriebeeinrichtung in ein niedrigeres Drehzahlverhältnis lässt sich in der Regel die Beschleunigungsleistung des Fahrzeugs erhöhen, dies wird aber häufig von den Insassen des Fahrzeugs als unangenehm empfunden, so dass ein möglichst großes Beschleunigungspotential des Fahrzeugs ohne Gangwechsel als von den Insassen als besser bewertet wird als ein geringes Beschleunigungspotential. Vorzugsweise werden mehrere Kennwerte für unterschiedliche Beschleunigungspotentiale bestimmt. Vorzugsweise wird wenigstens ein Kennwert für das Beschleunigungspotential vor dem Herunterschalten und nach dem Hochschalten bestimmt.

Vorzugsweise wird mit wenigstens einem, bevorzugt mit mehreren und besonders bevorzugt mit allen dieser Kennwerte für das Beschleunigungspotential die Eigenschaft des Fahrzeugs erfasst, aus einem stationären Fahrzustand in einen transienten Fahrzustand überzugehen, dabei ist unter einem stationären Fahrzustand die Fahrt mit unveränderlicher also konstanter Geschwindigkeit oder der Fahrzeug Stillstand zu verstehen. Unter einem transienten Fahrzustand ist die Fahrt des Fahrzeugs mit steigender Geschwindigkeit zu verstehen. Vorzugsweise ist die Stellung des Fahrpedals für die Ermittlung wenigstens eines, vorzugsweise aller, dieser Kennwerte für das Beschleunigungspotential konstant.

Vorzugsweise beginnt der Zeitraum für die Ermittlung des Kennwerts für das Beschleunigungspotential vor dem Herunterschalten in dem Zeitpunkt, in welchem das Fahrzeug die niedrigste mögliche Fahrgeschwindigkeit des aktivierten Drehzahlverhältnisses (eingelegter Gang), bevor vom Getriebesteuergerät ein Herunterschalten initiiert wird, erreicht und endet, nachdem ein konstanter Wert für das Fahrpedal vorgegeben wird, welcher eine Beschleunigung des Fahrzeugs hervorruft, bei einer Geschwindigkeit, die vorzugsweise 10 km/h, bevorzugt 20 km/h und besonders bevorzugt 30 km/h höher ist, als die Geschwindigkeit bei welcher dieser Vorgang gestartet wurde.

Vorzugsweise kann für die Berechnung der zuvor genannten Kennwerte für das Beschleunigungspotential ein vereinfachtes Modell für das Fahrzeug verwendet. Unter einem vereinfachten Modell für das Fahrzeug ist insbesondere ein parameterreduziertes Model des Fahrzeugs zu verstehen.

Vorzugsweise basiert die Berechnung der oben genannten Kennwerte für die Beschleunigungspotentiale auf einer Integration beziehungsweise auf einer numerischen Summation für den zuvor genannten Geschwindigkeitsbereich für die Ermittlung dieser Kennwerte. Vorzugsweise hängt der Kennwert vom Verhältnis zwischen der tatsächlichen in diesem Moment mit dem aktivierten Drehzahlverhältnis vorliegenden Beschleunigung $a_{schaltkennlinie}$ (i) und der maximal erreichbaren Beschleunigung, insbesondere der Beschleunigung welche erreichbar wäre, wenn die Antriebseinheit in ihrem Maximalleistungspunkt betrieben würde $a_{maxLeistung}$ (i). Dabei repräsentiert "i" vorzugsweise eine Zählvariable für die numerische Summation. Vorzugsweise wird aus diesen beiden Beschleunigungen ein Beschleunigungsverhältnis gebildet "Verhältnis (i)".

Vorzugsweise werden die unterschiedlichen Beschleunigungs- "Verhältnisse (i)" mit Gewichtungsfaktoren über den Zeitraum der Ermittlung gewichtet. Insbesondere durch die Gewichtung der Beschleunigungs- "Verhältnisse (i)" ist eine besonders präzise Kennwertbestimmung ermöglicht und damit ist ein verbessertes Verfahren erreichbar.

Vorzugsweise ergibt die Summe der Gewichtungsfaktoren in einem Summationsschritt den Wert 1. Vorzugsweise ist der erste Gewichtungsfaktor, wenigstens im Wesentlichen $w_{min}$ = 1/3, weiter vorzugsweise ist der zweite Gewichtungsfaktor, wenigstens im Wesentlichen, $w_{max}$ = 2/3. Weiter vorzugsweise wird der Gewichtungsfaktor für die einzelnen Summationsschritt nach folgenden Zusammenhang bestimmt:

$$w(i) = w_{min} + (w_{max} - wmin) \cdot \frac{i-1}{n-1}$$

Weiter vorzugsweise wird das "gewichtete Verhältnis (i)" aus dem "Verhältnis (i)" und dem zugehörigen Gewichtungsfaktor "w(i)" durch Multiplikation der beiden bestimmt. Vorzugsweise wird aus dem "gewichteten Verhältnis (i)" durch Summation über den gesamten Bereich zur Ermittlung des Kennwerts für das Beschleunigungspotential vor dem Herunterschalten bestimmt, die Berechnung genügt dabei vorzugsweise folgender mathematischen Vorgabe:

$$Verhältnis_{gesamt} = \frac{\sum_{i=1}^{n} gewichtetes\ Verhältnis\ (i)}{\sum_{i=1}^{n} w(i)}$$

Dabei gibt n vorzugsweise die Anzahl der numerischen Summationsschritte wieder.

Insbesondere durch ein verbessertes Verfahren zur Bestimmung des Kennwerts für das Beschleunigungspotential vor dem Herunterschalten ist eine besonders präzise Beschreibung der Getriebeeinrichtung ermöglicht.

In einer bevorzugten Ausführungsform wird ein Kennwert (Abs. Beschleunigungspotential-vor Herunterschalten-Kennwert) für eine Ziel-Beschleunigung des Fahrzeugs vor dem Herunterschalten bestimmt. Dieser Kennwert wird bei einer bestimmten Fahrzeuggeschwindigkeit berechnet, wobei sich diese Fahrzeuggeschwindigkeit dadurch auszeichnet, dass bei einem weiteren Absinken der Fahrgeschwindigkeit, insbesondere durch das Getriebesteuergerät bzw. durch die Getriebesteuerung eine Herunterschaltung (Wechsel des Drehzahlverhältnisses von n+1 nach n) initiiert wird. Insbesondere aus der Wahl dieses Betriebspunktes (kurz vor Herunterschalten) ist erkennbar, dass die Antriebseinrichtung in einer niedrigen Drehzahl betrieben wird.

Vorzugsweise wird die tatsächlich an diesem Berechnungspunkt erreichbare Beschleunigung, mit einer Zielfunktion der Beschleunigung verglichen. Vorzugsweise wird die Zielfunktion dadurch ermittelt, dass die bei ähnlichen Betriebspunkten erreichbaren Beschleunigungen vergleichbarer Fahrzeuge ausgewertet werden. Vorzugsweise ist die Zielfunktion eine freikonfigurierbare Funktion.

Viele Fahrer empfinden es an passend/akzeptabel, wenn sich das Beschleunigungspotential mit zunehmender Geschwindigkeit verringert. Vorzugsweise weist die Zielfunktion zur Ermittlung dieses Kennwerts einen mit zunehmender Fahrzeuggeschwindigkeit fallenden, bevorzugt einen degressiven Verlauf auf. Da dieser Kennwert das Beschleunigungspotential bei niedrigen Drehzahlen beschreibt, können die mit dem Fahrzeug erreichbaren Beschleunigungen, insbesondere in niedrigen Gängen, oberhalb dieser Zielfunktion liegen. Vorzugsweise kann als Zielfunktion auch die Volllastleistung der Antriebseinheit und die mit dieser maximal erreichbare Beschleunigung vorgegeben werden. Vorzugsweise kann auch die dauerhaft maximal von der Antriebseinheit abgebbare Antriebsleistung angesprochen sein.

Weiter vorzugsweise wird der Abstand zwischen der bei diesem Betriebspunkt erreichbaren Leistung, unter Berücksichtigung des aktivierten Drehzahlverhältnisses und der zuvor erläuterten Zielfunktion für die Beschleunigung berechnet. Dabei bedeutet ein großer Abstand zwischen der mit dem Fahrzeug, insbesondere unter Berücksichtigung des aktivierten Drehzahlverhältnisses, erreichbaren Beschleunigung und der Zielfunktion, dass das Beschleunigungspotential des Fahrzeugs schlechter ausgenutzt wird als wenn der Abstand geringer wäre.

Die mit einem bestimmten, aktivierten Drehzahlverhältnis erreichbare Beschleunigung, hängt dabei insbesondere von der Fahrzeuggeschwindigkeit ab, da die Rad-/Reifenkombination des Fahrzeugs über die Achsgetriebe und Antriebswellen im Wesentlichen drehstarr mit der Getriebeeinrichtung und der Antriebseinheit verbunden ist.

In einer bevorzugten Ausführungsform wird für die Ermittlung dieses Kennwerts ein Kennfeld erstellt, wobei in diesem Kennfeld für unterschiedliche Fahrzeuggeschwindigkeiten unterschiedliche Fahrzeugbeschleunigungen ermittelt und aufgetragen werden. Aus den ermittelten Fahrzeugbeschleunigungen in Zusammenhang mit der zuvor erläuterten Zielfunktion werden die Kennwerte $DR_{base}$ ermittelt.

In einer bevorzugten Ausführungsform wird der Kennwert (Beschleunigungspotential-nach Hochschaltungs-Kennwert) für die potenziell mögliche Beschleunigung des Fahrzeugs mittels eines Anpassungsfaktors weiter verbessert. Vorzugsweise ist dieser Anpassungsfaktor von der Fahrzeuggeschwindigkeit abhängig. Weiter vorzugsweise ist dieser Anpassungsfaktor aus einem Wertebereich ausgewählt, wobei dieser Wertebereich vorzugsweise kleiner oder gleich 1 ist, bevorzugt kleiner oder gleich 0,5 und besonders bevorzugt kleiner oder gleich 0,3 und weiter vorzugsweise ist dieser Wertebereich größer oder gleich null, vorzugsweise größer oder gleich 0,05 und weiter vorzugsweise größer oder gleich 0,1. Vorzugsweise wird dieser Anpassungsfaktor abhängig von der Fahrzeuggeschwindigkeit gewählt. Weiter vorzugsweise wird einer geringen Fahrzeuggeschwindigkeit ein kleiner Anpassungsfaktor und einer großen Fahrzeuggeschwindigkeit ein großer Anpassungsfaktor zugeordnet. Vorzugsweise wird der Fahrgeschwindigkeit von im Wesentlichen 50 km/h der kleinste Anpassungsfaktor zugeordnet und weiter vorzugsweise wird einer Fahrgeschwindigkeit, welche im Wesentlichen der Maximalgeschwindigkeit des Fahrzeugs entspricht, der größte Anpassungsfaktor zugeordnet.

Insbesondere durch einen derartigen Kennwert für die potentielle Beschleunigung des Kraftfahrzeugs mit Anpassungsfaktor ist eine besonders gute Beschreibung der Getriebeeigenschaften möglich und es wird ein verbessertes Verfahren zur Bewertung der Getriebeeinrichtung bereitgestellt.

In einer bevorzugten Ausführungsform wird ein Kennwert (Beschleunigungspotential-nach Hochschaltung-Kennwert) für das Beschleunigungspotential des Fahrzeugs bestimmt, insbesondere für das Beschleunigungspotential nach dem Hochschalten (Wechsel des Drehzahlverhältnisses von n nach n+1, beispielsweise Gangwechsel vom 3. In den 4. Gang). Insbesondere nach dem Hochschalten der Getriebeeinrichtung in ein höheres Drehzahlverhältnis verringert sich die Beschleunigungsleistung des Fahrzeugs.

Aufgrund dieser Verringerung des Beschleunigungsvermögens können Fahrmanöver auftreten, bei welchen eine größere Fahrzeugbeschleunigung vom Fahrer abgerufen wird, (Stellung des Fahrpedals) als in diesem Drehzahlverhältnis möglich ist. Ein solches Fahrmanöver führt unmittelbar nach der Hochschaltung zu einer Rückschaltung. Fahrzeuginsassen empfinden dieses unmittelbare Rückschalten nach einer Hochschaltung in der Regel als unangenehm. Es gilt demnach, die Eigenschaft der Getriebeeinrichtung zu bewerten, welches Potential diese aufweist, dass eine solche Rückschaltung nicht durchgeführt wird. Anders ausgedrückt wird mit diesem Kennwert bewertet, welches Beschleunigungspotential, in dem nach der Hochschaltung aktivierten Drehzahlverhältnis, zur Verfügung steht.

Dabei wird insbesondere ein großes Beschleunigungspotential als positiv empfunden. Vorzugsweise wird für ein Drehzahlverhältnis das Verhältnis zwischen der mit diesem Drehzahlverhältnis möglichen Vollastbeschleunigung und der mit diesem Drehzahlverhältnis nach der Hochschaltung erreichbaren Beschleunigung bestimmt. Vorzugsweise wird die Berechnung in der gleichen Weise durchgeführt wie bei der Berechnung des Kennwerts für das Beschleunigungspotential vor dem Herunterschalten.

Vorzugsweise beginnt die Berechnung dieses Kennwerts (Beschleunigungspotential nach dem Hochschalten) unmittelbar nach dem Hochschaltvorgang, bevorzugt beginnt die Berechnung dieses Kennwerts mit einem gewissen Abstand zur Hochschaltung, besonders bevorzugt beginnt die Berechnung 4 km/h nach Abschluss der Hochschaltung. Zur Ermittlung dieses Kennwerts wird die Stellung des Fahrpedals so vorgegeben, dass diese zu einer Beschleunigung des Fahrzeugs führt. Vorzugsweise wird dieser Vorgang für verschiedene Stellungen des Fahrpedals wiederholt, beziehungsweise wiederholt berechnet.

Der Bereich zur Ermittlung des Kennwerts für das Beschleunigungspotential nach dem Hochschalten endet vorzugsweise 15 oder mehr km/h nach dem Beginn dieses Zeitraums, vorzugsweise 20 oder mehr km/h und besonders bevorzugt 30 oder mehr km/h nach dem Beginn der Kennwert Berechnung. Dabei ist unter dem Ende des Zeitraums, der Zeitpunkt zu verstehen, ab welchem das Fahrzeug, beziehungsweise das virtuelle Modell des Fahrzeugs, den Bereich zur Ermittlung des Kennwerts aufgrund der Fahrzeugbeschleunigung verlässt. Der Wert für das Fahrpedal wird konstant vorgegeben.

Vorzugsweise kann für die Berechnung der zuvor genannten Kennwerte für das Beschleunigungspotential ein vereinfachtes Modell für das Fahrzeug verwendet werden. Unter einem vereinfachten Modell für das Fahrzeug ist insbesondere ein parameterreduziertes Modell des Fahrzeugs zu verstehen.

Dabei beruht die Berechnung dieses Kennwerts auf den gleichen Grundlagen wie die Berechnung des Kennwerts für das Beschleunigungspotential vor dem Herunterschalten.

Auch für den Kennwert für das Beschleunigungspotential nach dem Hochschalten wird vorzugsweise ein Anpassungsfaktor bestimmt. Vorzugsweise entspricht diese Berechnung dieses Anpassungsfaktors, wenigstens systematisch, der Berechnung für den Anpassungsfaktor für das Beschleunigungspotential vor dem Herunterschalten.

Insbesondere durch die dargelegte Art der Ermittlung eines Kennwerts für das Beschleunigungspotential nach dem Heraufschalten wird ein besonders zutreffender Kennwert für die Eigenschaften der Getriebeeinrichtung durch das verbesserte Verfahren zu deren Bewertung bereitgestellt.

In einer bevorzugten Ausführungsform wird ein Kennwert (Abs. Beschleunigungspotential-nach Hochschalten-Kennwert) für das Beschleunigungspotential des Fahrzeugs nach dem Hochschalten in Bezug auf eine Zielfunktion bestimmt. Dieser Kennwert wird bei einer bestimmten Fahrzeuggeschwindigkeit berechnet, wobei sich diese Fahrzeuggeschwindigkeit dadurch auszeichnet, dass diese oberhalb derjenigen des Hochschaltvorgangs liegt. Vorzugsweise liegt diese Geschwindigkeit unmittelbar nach dem Hochschalten, bevorzugt 2 km/h und besonders bevorzugt 4 km/h oberhalb der Hochschaltgeschwindigkeit, das ist die Geschwindigkeit, bei welcher die Hochschaltung initiiert wird.

Vorzugsweise wird die tatsächlich an diesem Berechnungspunkt erreichbare Beschleunigung mit der Beschleunigung des Fahrzeugs, vorgegeben durch die Zielfunktion, vorzugsweise wird die Zielfunktion für das Beschleunigungspotential wie zuvor beschrieben ermittelt. Weiter vorzugsweise wird ein Verhältnis aus diesen beiden Beschleunigungen gebildet.

Weiter vorzugsweise wird der Abstand zwischen der bei diesem Betriebspunkt erreichbaren Leistung, unter Berücksichtigung des aktivierten Drehzahlverhältnisses, und der Beschleunigung nach der Zielfunktion berechnet. Vorzugsweise orientiert sich die Berechnung des Kennwerts für die potenziell mögliche Beschleunigung des Fahrzeugs nach dem Hochschalten an der Berechnung des Kennwerts für die potenziell mögliche Beschleunigung des Fahrzeugs vor dem Herunterschalten, beziehungsweise entspricht dieser wenigstens systematisch.

In einer bevorzugten Ausführungsform wird der Kennwert für die potenziell mögliche Beschleunigung des Fahrzeugs nach dem Hochschalten mittels eines Anpassungsfaktors weiter verbessert. Vorzugsweise orientiert sich die Berechnung dieses Anpassungsfaktors an der Berechnung des Anpassungsfaktors für die Verbesserung des Kennwerts für das Beschleunigungspotential vor dem Hochschalten, beziehungsweise entspricht dieser wenigstes systematisch.

Insbesondere durch einen derartigen Kennwert für die potentielle Beschleunigung des Kraftfahrzeugs nach dem Hochschalten mit Anpassungsfaktor ist eine besonders gute Beschreibung der Getriebeeigenschaften möglich und es wird ein verbessertes Verfahren zur Bewertung der Getriebeeinrichtung bereitgestellt.

In einer bevorzugten Ausführungsform wird mit dem erfindungsgemäßen Verfahren ein Kennwert (Fahrzeug-Beschleunigungs-Kennwert) für die Fahrzeugbeschleunigung berechnet. Vorzugsweise wird dazu eine Reihe von Rechenvorschriften verwendet, welche nachfolgend dargestellt sind:

$$i_{gesamt} = i_{getriebe} \cdot i_{diff}$$

$$factor_{gbx} = i_{gesamt} \cdot \theta_{gesamt}$$

mit

$i_{gesamt}$: Gesamtübersetzung, Getriebe ($i_{getriebe}$) und Achsübersetzung ($i_{diff}$)
$\theta_{gesamt}$: Wirkungsgrad

$$F_{rr} = A_0 + B_0 \cdot v_{fahrzeug} + C_0 \cdot v_{fahrzeug}^2$$

Dabei weist der Rollwiderstang ($F_{rr}$) geschwindigkeitsunabhängige Anteile ($A_0$) linear geschwindigkeitsabhängige Anteile ($B_0$) und quadratisch von der Geschwindigkeit des Fahrzeugs ($v_{fahrzeug}$) abhängige Anteile ($C_0$) auf.

Die Trägheitsmasse der Radreifenkombination ergibt sich aus folgendem Zusammenhang:

$$m_{rad/reifen} = 4 \cdot \frac{J_{rad/reifen\_berechnet}}{r_{rad/reifen}^2}$$

mit

$J_{rad/reifen\_berechnet}$: Massenträgheitsmoment der Rad-/Reifenkombination

r: Radius der Rad-/Reifenkombination

Aus diesen Werten ist mit der nachfolgend wiedergegebenen Rechenvorschrift die Beschleunigung des Fahrzeugs als Kennwert berechenbar:

$$a = \frac{M_{mot} - \dfrac{F_{rr} \cdot r_{rad/reifen}}{factor_{gbx}}}{J_{ICE-berechnet} \cdot \dfrac{i_{getriebe}}{r_{rad/reifen}} + \dfrac{(m_{fahrzeug} + m_{rad/reifen}) \cdot r_{rad/reifen}}{factor_{gbx}}}$$

mit

$J_{ICE-berechnet}$: berechnet oder gemessenes Trägheitsmoment der Antriebseinrichtung
$m_{fahrzeug}$: Fahrzeugmasse
$m_{rad/reifen}$: Masse aller Rad-/Reifenkombinationen am Fahrzeug
$M_{mot}$: Antriebsdrehmoment von der Antriebseinheit

Insbesondere der, mit diesen Rechenvorschriften ermittelte, Fahrzeugbeschleunigungs-Kennwert kann für jedes Drehzahlverhältnis bestimmt werden und stellt einen besonders repräsentativen Kennwert für die Funktionalität der Getriebeeinrichtung dar.
In einer bevorzugten Ausführungsform wird aus wenigstens zwei, bevorzugt aus mehreren der zuvor genannten Kennwerte wenigstens ein gemeinsamer Kennwert zur Bewertung einer Getriebeeinrichtung gebildet. Weiter vorzugsweise werden wenigstens zwei gemeinsame Kennwerte für die Bewertung der Getriebeeinrichtung gebildet.
Vorzugsweise wird der erste dieser zwei Kennwerte aus einer Gruppe von den zuvor genannten einzelnen Kennwerten, vorzugsweise aus Kennwerten $DR_{final}$ oder $DR_{base}$ oder aus einer Kombination dieser Kennwerte, gebildet. Für diesen ersten Kennwert werden nur solche der zuvor genannten Kennwerte herangezogen, bei welchen insbesondere die Stellung des Fahrpedals konstant ist oder als konstant vorgegeben wird. Im nachfolgenden werden die Kennwerte $DR_{final}$ und $DR_{base}$ verallgemeinert mit $DR_n$ oder $DR_i$ angegeben. Dies ist insbesondere deshalb sinnvoll, da derartige Kennwerte von der Stellung/Vorgabe des Fahrpedals abhängen. Dabei können für mehrere diskrete Pedalstellungen mehrere Kennwerte bestimmt werden, beispielsweise für die Vorgabe der Stellung des Fahrpedals mit 10%, 20%, 30%, usw. der maximalen Stellung des Fahrpedals oder andere diskrete Werte zwischen 0 und 100 %.
Vorzugsweise werden zur Bildung dieses ersten Kennwertes wenigstens solche der zuvor beschriebenen einzelnen Kennwerte herangezogen, die in der folgenden Gruppe von Kennwerten enthalten sind:

- Hochschalt-Drehzahlverhalten,
- Hochschalt-Gangzeit,
- Hochschalt-Start-Drehzahl,
- Drehzahlverhältnis-Aktiv

Vorzugsweise wird ein zweiter Kennwert aus einer Gruppe von den zuvor genannten einzelnen Kennwerten gebildet, vorzugsweise aus Kennwerten $DR_{final}$ oder $DR_{base}$ oder aus einer Kombination von Kennwerten $DR_{final}$ und $DR_{base}$, auch diese Kennwerte werden nachfolgend mit $DR_n$ oder $DR_i$ bezeichnet. Für diesen zweiten Kennwert werden nur solche der zuvor genannten Kennwerte herangezogen, bei welchen insbesondere die Fahrzeuggeschwindigkeit konstant ist oder als konstant vorgegeben wird. Dies ist insbesondere deshalb sinnvoll, da derartige Kennwerte von der Geschwindigkeit des Fahrzeugs abhängen. Dabei können für mehrere diskrete Fahrzeuggeschwindigkeiten mehrere Kennwerte bestimmt werden, beispielsweise für Vorgaben, Fahrgeschwindigkeit: 10%, 20%, 30%, usw. der maximalen Fahrgeschwindigkeit oder andere diskrete Werte zwischen 0 und 100 %.
Vorzugsweise werden zur Bildung dieses zweiten Kennwerts wenigstens solche der zuvor beschriebenen einzelnen Kennwerte herangezogen, die in der folgenden Gruppe von Kennwerten enthalten sind:

- Herunterschalt-Beschleunigung,
- Beschleunigungspotential-vor Herunterschalten,
- Abs. Beschleunigungspotential-vor Herunterschalten,
- Beschleunigungspotential-nach Hochschalten,
- Abs. Beschleunigungspotential-nach Hochschalten

Einzelne Kennwerte werden vorzugsweise aus einer Vielzahl von berechneten Werten gebildet, beispielsweise kann für jeden Schaltvorgang ein einzelner Wert/Kennwerte bestimmt werden, diese einzelnen Werte werden dann zu einem Gesamtkennwert für eine zu bewertende Eigenschaft/Merkmal der Getriebeeinrichtung zusammengefasst und vorzugsweise mit $DR_p$ bezeichnet.

Vorzugsweise wird für jeden der zuvor genannten (neun) Kennwerte ("Hochschalt-Drehzahlverhalten" bis "Abs. Beschleunigungspotential-nach Hochschalten") ein eigener Gesamtkennwerte $DR_p$, vorzugsweise also $DR_{p\ \text{Hochschalt-Drehzahlverhalten}}$ bis $DR_{p\ \text{Abs. Beschleunigungspotential-nach}}$ Hochschalten berechnet. Weiter vorzugsweise wird wenigstens einer der Gesamtkennwerte durch eine Summation der einzelnen Kennwerte für das entsprechenden Merkmal/Eigenschaft der einzelnen Kennwerte der Getriebeeinrichtung gebildet.

Vorzugsweise werden die Gesamtkennwerte $DR_{p\ \text{Hochschalt-Drehzahlverhalten}}$ bis $DR_{p\ \text{Abs. Beschleunigungspotential-nach}}$ Hochschalten gewichtet. Vorzugsweise werden die einzelnen Kennwerte mit dem Vorgabewert p so potenziert, dass der gemeinsame Kennwert nur geringfügig besser werden kann als der schlechteste einzelne Kennwert. In einer bevorzugten Ausführungsform wird für p der Wert 1 angenommen. Insbesondere durch einen Wert 1 für p wird eine Mittelwertbildung ermöglicht und sämtliche Kennwerte fliesen gleich gewichtet in die Berechnung ein. Insbesondere durch einen Wert p = 1 wird ein besonders einfacher Gesamtkennwert bestimmt.

In einer bevorzugten Ausführungsform wird für p ein von "1" verschiedener Wert angenommen, vorzugsweise p größer 1, bevorzugt p größer 2 und besonders bevorzugt p größer 3 und weiter vorzugsweise wir für p ein Wert angenommen kleiner gleich 20, bevorzugt kleiner als 15 und besonders bevorzugt kleiner oder gleich 10. Weiter vorzugsweise wird p so gewählt, dass es wenigstens im Wesentlichen dem Wert 7 oder 10 entspricht. Dabei ist unter "im Wesentlichen entsprechen" ein Bereich von +/- 1,5 zu verstehen.

Weiter vorzugsweise wird wenigstens einer der Gesamtkennwerte $DR_{p\ \text{Hochschalt-}}$Drehzahlverhalten bis $DR_{p\ \text{Abs. Beschleunigungspotential-nach Hochschalten}}$, diese werden vereinfachend nachfolgend als $DR_p$ bezeichnet, bestimmt. Dabei wird $DR_p$ vorzugsweise für 1 bis n einzelne Kennwerte/Rechenpunkte ($DR_1$-$DR_n$), wobei n die Anzahl der Kennwerte oder Einzelberechnungen (beispielsweise Anzahl der Schaltungen, Geschwindigkeitsstufen, Fahrpedalstellungen, oder andere veränderbare Parameter) angibt, mittels folgender Rechenvorschrift bestimmt:

$$DR_p(DR_1, DR_2, .. DR_n) = 11 - \left(\frac{1}{n}\sum_{i=1}^{n}(11 - DR_i)^p\right)^{\frac{1}{p}}$$

Die Zahl 11 in obiger Rechenvorschrift ist insbesondere durch den Wertebereich der einzelnen Kennwerte (1 kleiner oder gleich $DR_{base}$ beziehungsweise $DR_{final}$ kleiner oder gleich 10; $1 \le DR_{base}$, $DR_{final} \le 10$) bedingt und ist bei einer Änderung dieses Wertebereichs entsprechend zu verändern. Vorzugsweise entspricht in der Rechenvorschrift für Ermittlung von $DR_p$, jeder Kennwert $DR_i$ einem Kennwert $DR_{final}$ oder vorzugsweise einem Kennwert $DR_{base}$, insbesondere wenn für den Anpassungsfaktor gilt $adjust_{factor} = 0$.

Insbesondere durch die beschriebene Art der Ermittlung der Gesamtkennwerte für die einzelnen Eigenschaften/Merkmale der Getriebeeinrichtung wird ein aussagekräftiger Kennwert zur Bewertung einer Getriebeeinrichtung bereitgestellt.

In einer bevorzugten Ausführungsform wird aus den Gesamtkennwerten ein Globalkennwert $DR_{pg}$ nach der oben für $DR_p$ angegebenen Rechenvorschrift bestimmt. Anstelle der Kennwerte $DR_i$ werden dann die Gesamtkennwert $DR_{p\ \text{Hochschalt-Drehzahlverhalten}}$ bis $DR_{p\ \text{Abs. Beschleunigungspotential-nach}}$ Hochschalten eingesetzt.

Weiter vorzugsweise wird der Globalkennwert nach einer eigenen Rechenvorschrift bestimmt. Vorzugsweise ist es mit dieser Rechenvorschrift ermöglicht einzelne Gesamtkennwert $DR_p$ unterschiedliche zu gewichten. Insbesondere diese Gewichtung erlaubt eine besonders gute und insbesondere bedarfsorientierte Bewertung der Getriebeeinrichtung. Weiter vorzugsweise wird der Globalkennwert $DR_{pg}$ mittels folgender Rechenvorschrift aus den Gesamtkennwerten $DR_p$, für 1 bis l Gesamtkennwerte (mit "l" Anzahl der Kennwerte $DR_p$) bestimmt:

$$DR_{pg} = DR_p(DR_{k1,} ... DR_{kl})$$

$$DR_{pg} = 11 - \left(\frac{1}{\sum_{k=1}^{l} w_k} \cdot \sum_{k=1}^{l} w_k \cdot (11 - DR_k)^p\right)^{\frac{1}{p}}$$

In der Rechenvorschrift für $DR_{pg}$ stellt der Faktor $w_k$ den Gewichtungsfaktor für die einzelnen Gesamtkennwerte dar, $w_k$ kann für jeden Gesamtkennwerte unterschiedliche gewählt werden. Sollen einzelnen Gesamtkennwerte nicht in die Berechnung einfließen kann $w_k = 0$ gesetzt werden. In der Rechenvorschrift für $DR_{pg}$ gibt I die Anzahl der Gesamtkennwerte wieder, welche in die Berechnung für den Globalkennwert einfließen.

Insbesondere durch die Berechnung eines Globalkennwertes aus vorzugsweise wenigstens zwei, bevorzugt mehreren und besonders bevorzugt allen Gesamtkennwerten $DR_p$ wird für eine komplexe Getriebeeinrichtung ein aussagekräftiger Kennwert zur Verfügung gestellt.

Das erfindungsgemäße Verfahren kann genauso ausgeführt werden, um ein Getriebe für einen bestimmten Einsatz zu optimieren.

Das erfindungsgemäße Verfahren kann vorzugsweise an einem realen Fahrzeug, bevorzugt an einem Prüfstand, aber besonders bevorzugt auch im Rahmen einer Simulation eingesetzt werden. Insbesondere bei Verwendung dieses Verfahrens in einer Simulation ist es nicht notwendig, dass das gesamte Fahrzeug oder auch nur einzelne Baugruppen des Fahrzeugs real vorhanden sind, vielmehr ist es dadurch ermöglicht die Getriebeabstufung bereits in der Entwicklungsphase des Fahrzeuggetriebes zu bewerten.

Bei der Durchführung des Verfahrens am realen Fahrzeug werden vorzugsweise alle zur Einstellung benötigten Parameter messtechnisch erfasst und überwacht. Ferner werden alle für die Auswertung erforderlichen Messwerte erfasst und vorzugsweise aufgezeichnet und entweder schon bei der Messung weiterverarbeitet und ausgewertet (Online-Messung) oder zu einem späteren Zeitpunkt (Offline - Messung).

Das erfindungsgemäße Verfahren kann auch am Prüfstand ausgeführt werden. Dazu werden die Antriebseinheit oder eine Antriebsmaschine, welche das Verhalten der Antriebseinheit nachbildet, und das Getriebe auf einem Prüfstand angeordnet und mittels einer vorzugsweise elektrischen Bremseinrichtung belastet bzw. um den Schubbetrieb zu erfassen, angetrieben. Auch hier werden alle für die Auswertung erforderlichen Messwerte erfasst und vorzugsweise aufgezeichnet und ebenfalls entweder schon bei der Messung weiterverarbeitet und ausgewertet (Online-Messung) oder zu einem späteren Zeitpunkt (Offline - Messung).

Das erfindungsgemäße Verfahren kann aber auch im Rahmen einer Simulation ausgeführt werden. Dazu werden vorzugsweise Datensätze mit einbezogen, die von Messungen an einem realen Antriebsmotor und einem realen Getriebe und vorzugsweise auch an einem realen Fahrzeug abgeleitet sind. Diese Datensätze werden für die Simulation so modifiziert, dass sie den Eigenschaften eines zu simulierenden Antriebsmotors und/oder eines Getriebes und/oder einem bestimmten Fahrprofil entsprechen. Dadurch ist es beispielsweise möglich, bei einem gegebenen Antriebsmotor verschiedene Getriebebauarten zu vergleichen, um zu ermitteln, wie das Getriebe abgestimmt sein muss, also insbesondere wie die Drehzahlverhältnisse zu wählen sind, damit sich die für das jeweilige Fahrzeug ergebenden Eigenschaften optimal sind. Eine solche Simulation kann verwendet werden, um zu ermitteln, wie sich bei einem schon vorhandenen Fahrzeug Änderungen von Motor und/oder Getriebeeigenschaften auswirken. Die Simulation kann aber auch für die Entwicklung eines neuen Fahrzeugs verwendet werden. In diesem Fall werden vorzugsweise Vergleichsdaten verwendet, die von einem Referenzfahrzeug stammen, beispielsweise vom jeweiligen Vorgängermodell des Fahrzeugs und es kann dann ermittelt werden, wie Motor und Getriebe aufeinander abgestimmt sein müssen, damit optimale Fahreigenschaften erwartet werden können.

Die Vorgabe eines oder mehrerer Sollwerts/Sollwerte für den realen oder simulierten Betrieb eines Fahrzeugs kann auf unterschiedliche Weise erfolgen.

Ein bevorzugtes Mittel zur Sollwert-Vorgabe ist das Fahrpedal bzw. die diesem entsprechende Steuerung am Prüfstand oder eine entsprechende Dateneingabe bzw. Datenvorgabe an ein Computersystem, in dem das Verhalten des Antriebsmotors und des Getriebes simuliert wird.

Die Sollwert-Vorgabe kann beispielsweise lauten, dass, beginnend mit einer Anfangsgeschwindigkeit $v_0$ oder der Anfangsgeschwindigkeit Null, das Fahrpedal in eine Stellung gebracht wird, die z.B. einem bestimmten Prozentsatz der Maximalstellung (z. B. vollständige geöffnete Drosselklappe) entspricht. Das Fahrzeug beschleunigt dann kontinuierlich, bis ein Schaltpunkt erreicht ist und setzt die Beschleunigung unter fortgesetztem Hochschalten solange fort, bis das Drehmoment des Motors so hoch ist, dass bei der entsprechenden Geschwindigkeit die Antriebskräfte an den angetriebenen Rädern in Gleichgewicht mit dem Fahrwiderstand stehen.

Neben einer konstanten Vorgabe einer Fahrpedalstellung kann die Fahrpedalstellung während des Messvorgangs auch veränderbar sein.

Eine Sollwert-Vorgabe kann auch dadurch erfolgen, dass das Fahrzeug zunächst mit einer konstanten (oder veränderbaren) Fahrpedalstellung bis zu einer bestimmten Geschwindigkeit beschleunigt wird und dass dann diese Geschwindigkeit beibehalten wird. Eine solche Situation entsteht beispielsweise beim Überholen auf der Landstraße, wenn das Getriebe herunterschaltet, um eine höhere Beschleunigung zu ermöglichen. Sobald das Fahrzeug dann wieder konstante Geschwindigkeit fährt, schaltet das Getriebe herauf, um den Verbrauch zu reduzieren. In diesem Fall erfolgt die Sollwert-Vorgabe als Vorgabe einer konstanten Geschwindigkeit mit der Maßgabe, diese Geschwindigkeit im verbrauchsoptimalen Bereich zu fahren.

Die Sollwertvorgabe kann sich auch durch das Streckenprofil ergeben. Wenn die Vorgabe Fahren mit konstanter Geschwindigkeit lautet, schaltet das Getriebe herunter, wenn die Steigung ein höheres Antriebs-Drehmoment fordert, als bei der vorgegeben Geschwindigkeit erreichbar ist.

Eine Sollwertvorgabe kann auch durch ein vorgegebenes Fahrprofil mit veränderbaren Geschwindigkeiten erfolgen, wie dies z.B. beim NEFZ (neuer europäischer Fahrzyklus) der Fall ist.

In einer bevorzugten Ausführungsform wird wenigstens einer, bevorzugt mehrere und besonders bevorzugt werden alle, der zuvor ermittelten Kennwert zur Verbesserung, insbesondere Optimierung, der Getriebeeinrichtung herangezogen. Vorzugsweise werden für die Verbesserung der Getriebeeinrichtung wenigstens ein erster Satz und ein zweiter Satz von einzelnen Kennwerten berechnet. Für diesen zweiten Satz von Kennwerten wird wenigstens eine, bevorzugt mehrere Schaltkennlinien der Getriebeeinrichtung verändert. Vorzugsweise werden diese ersten Kennwerte mit diesen zweiten Kennwerten verglichen, vorzugsweise mit Hilfe von Gesamtkennwerten oder mit Hilfe von Globalkennwerten.

Insbesondere durch den Vergleich von wenigsten zwei Sätzen von Kennwerten für veränderte Getriebeeinrichtungen wird ein verbessertes Verfahren zur Optimierung von Getriebeeinrichtungen bereitgestellt.

Vorzugsweise werden veränderbare Parameter der Getriebeeinrichtung, insbesondere die Kennlinien für Hochschalt- und Herunterschaltvorgänge solange verändert, vorzugsweise durch ein Rechenprogramm, besonders bevorzugt durch ein numerisches Optimierungsverfahren, ganz besonders bevorzugt mit Hilfe eines generischen Algorithmus. Vorzugsweise wird die Optimierung mit Hilfe der bekannten Methodik der "Differential Evolution" optimiert.

In einer bevorzugten Ausführungsform wird wenigstens ein, bevorzugt mehrere Randbedingungen für die Berechnungen vorgegeben. Vorzugsweise werden die Randbedingungen aus einer Gruppe von Randbedingungen ausgewählt, welche wenigstens folgende Elemente enthält:

Für die Stellung des Fahrpedals 0%, insbesondere also "Leerlauf"-bedingung:

- Fahrzeuggeschwindigkeits-Hysterese, insbesondere Abstand zwischen Hochschalt- und Herunterschaltkennlinie angegeben, vorzugsweise in einer Einheit Weg/Zeit, bevorzugt in m/s besonders bevorzugt in km/h,
- Minimale Drehzahl/Geschwindigkeit der Antriebseinheit für ein aktives Drehzahlverhältnis der Getriebeeinrichtung, vorzugsweise in Umdrehungen/Zeit, bevorzugt in 1/min,

Für das vertikale Ende der Hoch-Schaltkennlinie:

- Minimale Fahrzeugbeschleunigung

Für die Stellung des Fahrpedals 100%, insbesondere also maximale Beschleunigung:

- Unterschied der Drehzahl/Geschwindigkeit der Getriebeeingangswelle bis zum Zielbereich/Drehzahlverhältnis, dabei ist hierdurch insbesondere die Drehzahldifferenz zwischen der Rückschaltkennlinie und der Hochschaltkennlinie, vorzugsweise einer Fahrpedalstellung von 100% (Vollastbeschleunigung) angesprochen.
- Zeitlicher Unterschied bis zum Hochschaltvorgang, dabei ist hierdurch insbesondere die Zeit, welche nach einem Rückschaltvorgang vergeht, bis wieder ein Hochschaltvorgang folgen kann, insbesondere bei einer Fahrpedalstellung von 100% (Vollastbeschleunigung) angesprochen.

Weitere Vorteile, Merkmale und Anwendungsmöglichkeiten der vorliegenden Erfindung ergeben sich aus der nachfolgenden Beschreibung in Zusammenhang mit den Figuren.

Es zeigt:

Fig. 1   ein Diagramm für die Korrelation zwischen der Fahrpedalstellung und der Drehzahl an der Getriebeeingangswelle beziehungsweise an der Antriebswelle der Antriebseinrichtung,

Fig. 2   ein Diagramm für die Zeit, wie lange die einzelnen Drehzahlverhältnisse in der Getriebeeinrichtung während eines Beschleunigungsvorgangs aktiviert sind,

Fig. 3   ein Diagramm für die Drehzahlentwicklung während eines einzelnen Hochschaltvorgangs,

Fig. 4   ein Diagramm für die Dauer, wie lange ein Drehzahlverhältnis nach einem Herunterschaltvorgang aktiviert bleibt bis zum nächsten Hochschaltvorgang

Fig. 5   ein Diagramm für die Korrelation der Fahrpedalstellung und der Fahrzeuggeschwindigkeit sowie für die Fahrzeugbeschleunigung und die Gaspedalstellung in absoluter und normalisierter Darstellung,

Fig. 6    ein Diagramm für das vorhandene Beschleunigungspotential vor dem Herunterschalten,

Fig. 7    ein Diagramm für das absolute Beschleunigungspotential vor dem Herunterschalten,

Fig. 8    ein Diagramm für das vorhandene Beschleunigungspotential nach dem Hinaufschalten,

Fig. 9    ein Diagramm für das absolute Beschleunigungspotential nach dem Hinaufschalten.

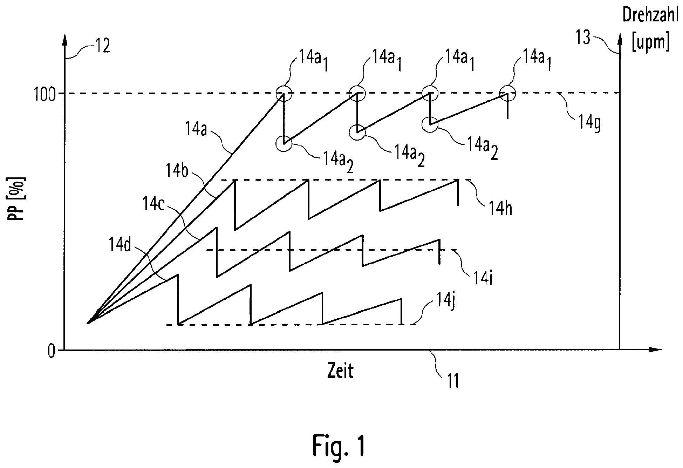

In Figur 1 ist die Drehzahlentwicklung 14a bis 14d über mehrere Schaltvorgänge bei unterschiedlichen Stellungen des Fahrpedals (PP) dargestellt. Die Fahrpedalstellung (PP) wird während eines solchen Beschleunigungsvorgangs konstant gehalten und kann an der ersten Ordinate 12 abgelesen werden. Die Fahrpedalstellung kann zwischen null (Leerlauf) und 100 % (Vollast) vorgegeben werden. Das Drehzahlverhalten der Getriebeeingangswelle wird durch die Graphen 14a bis 14d repräsentiert. Dabei repräsentiert der Graph 14a eine Volllastbeschleunigung, Fahrpedalstellung 14g, also eine Beschleunigung mit Fahrpedalstellung 100 %. Allen dargestellten Graphen 14a bis 14b ist es gemein, dass diese vier Hochschaltvorgänge zeigen. Durch die Schaltvorgänge ergibt sich ein sägezahnartiges Profil der Grafen 14a bis 14d. Die Fahrzeugbeschleunigung 14b wird mit einer Fahrpedalstellung 14h erreicht; die Fahrzeugbeschleunigung 14c mit einer Fahrpedalstellung von 14i und die Fahrzeugbeschleunigung 14d mit einer Fahrpedalstellung 14j.

An der zweiten Ordinate 13 kann die Eingangsdrehzahl in die Getriebeeinrichtung abgelesen werden, dies entspricht einerseits der Drehzahl der Getriebeeingangswelle und andererseits die Drehzahl der Antriebswelle der Antriebseinrichtung. Die Beschleunigungsvorgänge (14a bis 14d) sind jeweils über der Zeit 1 dargestellt.

Für die Ermittlung eines Kennwerts vorliegend des Kennwerts für das Hochschalt-Drehzahl-Verhalten sind letztlich die Drehzahlen vor und nach dem Schaltvorgang, insbesondere unmittelbar vor (siehe Datenpunkte 14a1) und nach (siehe Datenpunkte 14a2) dem Schaltvorgang von großer Bedeutung. Die Datenpunkte 14a1 und 14a2 sind vorliegend nur für die Vollastbeschleunigung angegeben, diese liegen in gleicherweise auch bei den Graphen 14b bis 14d vor.

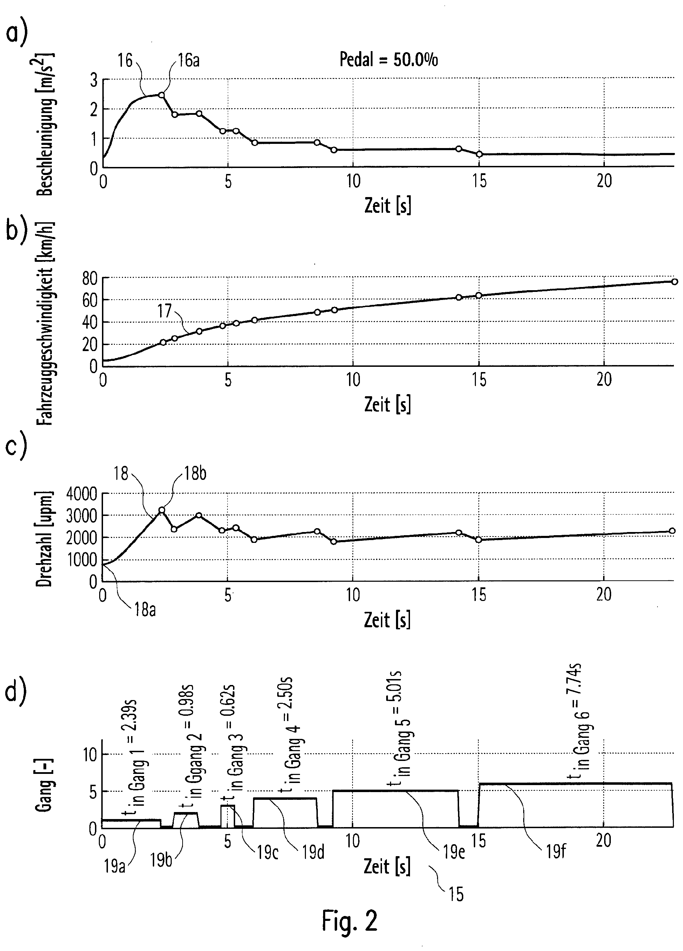

In Figur 2 a) ist für eine Fahrpedalstellung von 50% der zeitliche Verlauf der Fahrzeugbeschleunigung 16 aufgetragen. Es ist weiter die zeitliche Entwicklung für die Fahrzeuggeschwindigkeit 17, Figur 2 b); die Drehzahl der Getriebeeingangswelle 18, Figur 2 c); und die Zeit welche ein Drehzahlverhältnis aktiviert ist 19, Figur 2 d), dargestellt. Auf der Abszisse ist für alle Figuren 2 a) bis 2d) die Zeit 15 aufgetragen.

Abweichend von dem dargestellten Zusammenhang wäre auch jede andere Fahrpedalstellung möglich. An der Beschleunigung 16 ist erkennbar, dass diese nach jedem Hochschaltvorgang, explizit gekennzeichnet ist die Hochschaltung 16a vom 1. In den 2. Gang, abnimmt. Bei Start des Fahrzeugs aus dem Stillstand nimmt die Beschleunigung zunächst kontinuierlich zu, dies ist mit dem Drehzahl/Drehmoment-Verhalten der Antriebseinrichtung zu erklären. Die Fahrzeuggeschwindigkeit 17 nimmt über alle Schaltvorgänge kontinuierlich zu und hängt von der Entwicklung der Beschleunigung 16 ab.

In Figur 2 c) ist die Drehzahl der Getriebeeingangswelle beziehungsweise der Antriebswelle der Antriebseinrichtung über der Zeit dargestellt. Bei einer Beschleunigung aus dem Stillstand nimmt die Motordrehzahl zunächst aus der Leerlaufdrehzahl 18a kontinuierlich zu. Wird die Schaltdrehzahl 18b, für die Hochschaltung vom 1. in den 2. Gang erreicht, wird das nächste Drehzahlverhältnis aktiviert. Die Drehzahl fällt bei einem solchen Hochschaltvorgang zunächst ab und nimmt dann wieder, soweit das Fahrzeug weiter beschleunigt, zu, bis die nächste Schaltdrehzahl erreicht wird.

In Figur 2 d) ist dargestellt wie lange welches Drehzahlverhältnis aktiviert ist. Zunächst ist der erste Gang für die Zeitspanne 19a eingelegt, danach wird für die Zeitspanne 19b in den zweiten Gang hochgeschalten, bis zum Ende des Beschleunigungsvorgangs werden der Reihe nach der 3., 4., 5. und 6. Gang, für die Zeitspannen 19c, 19d, 19e und 19f eingelegt. Aus diesen Zeiten für welche die einzelnen Drehzahlverhältnisse aktiviert sind (19a-19f) lässt sich ein wichtiger Kennwert für die Getriebeeinrichtung mit den genannten Rechenvorschriften bestimmen.

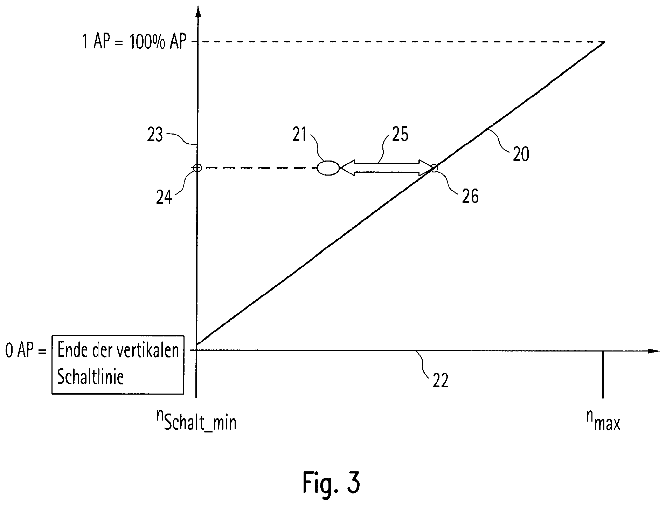

In Figur 3 ist das Drehzahlverhalten zu Beginn des Schaltvorgangs einem vorausberechneten Drehzahlverhalten 20 gegenübergestellt. Dabei ist die hier als Gerade dargestellte Zielkurve 20 für die vorausberechnete Drehzahl frei konfigurierbar, so dass mit dieser unterschiedliche Betriebsmodi (Energieeffizienz, Sport, Komfort oder andere) abgebildet werden können. Mit anderen Worten, es ich auch ein anderer als dieser lineare Verlauf denkbar, dies kann z.B. dann sinnvoll sein, wenn bestimmte Anforderungen an den Spritverbrauch oder die Sportlichkeit erreicht werden sollen. In der in Figur 3 dargestellten Grafik ist die Fahrpedalstellung 23 über der Drehzahl der Getriebeeingangswelle 22 beziehungsweise der Antriebswelle der Antriebseinrichtung dargestellt. Für eine bestimmte Fahrpedalstellung 24 lässt sich dann über den Abstand der berechneten Drehzahl 21 der Getriebeeingangswelle und der vorausberechneten Drehzahl 26 für diese Fahrpedalstellung, der Abstand 25 zwischen diesen Drehzahlen 21 und 26 ermitteln. Aus dem Abstand 26 lässt sich ein wichtiger Kennwert für die Beurteilung der Getriebeeinrichtung ableiten.

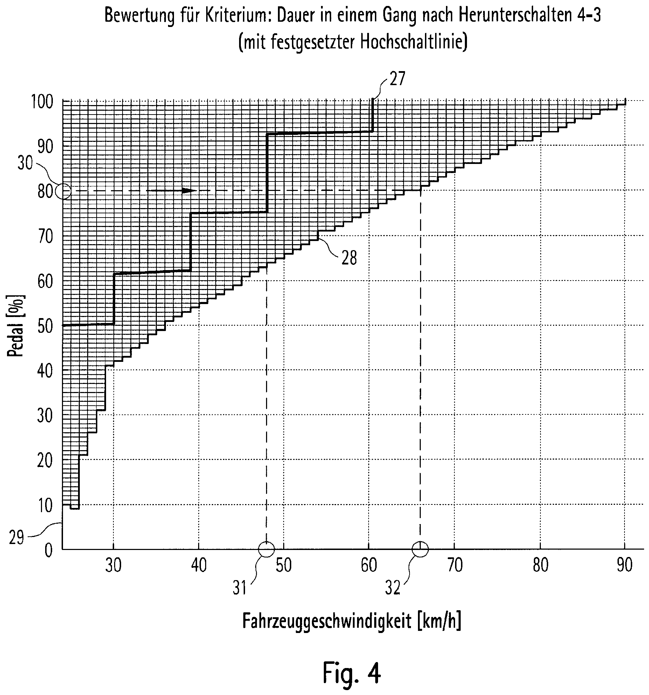

In Figur 4 ist eine Grafik dargestellt, welche eine Beurteilung der Zeitspanne zulässt, wie lange ein bestimmtes Drehzahlverhältnis zwischen einer Herunterschaltung und einer Hochschaltung aktiviert ist, im dargestellten Beispiel eine Wechsel vom 4. in den 3. Gang (und zurück). Als Randbedingungen sind zur Bestimmung dieses Kennwerts vorgegeben, die Fahrpedalstellung (konstant), der Beginn der Zeitmessung unmittelbar nach der Rückschaltung (vom 4. in den 3. Gang) und das Ende der Zeitmessung, dann wenn die Hochschaltung (vom 3. in den 4. Gang) initiiert wird. Dabei ist klar, dass dies für sämtliche andere Gangwechsel in der gleichen Weise darstellbar ist.

Dabei markiert die gestufte Linie 27 die Herunterschaltkennlinie (Start der Zeitmessung). Geht man von einer Fahrpedalstellung 30 von 80% aus, wird eine Herunterschaltung 31 bei ca. 48 km/h Fahrzeuggeschwindigkeit ausgelöst.

Bei weiterhin konstanter Fahrpedalstellung 30 von 80% findet die darauffolgende Hochschaltung bei ca. 65 km/h statt. Aus diesem Zusammenhang ist ableitbar, wie lange ein Drehzahlverhältnis aktiviert ist. Es lässt sich daraus ein wichtiger Kennwert für die Beurteilung der Getriebeeinrichtung ableiten, denn viele Fahrer empfinden es als positiv, wenn das gewählte Drehzahlverhältnis nach einer Herunterschaltung (27) lange aktiviert ist. Dieses Verhalten kann im Sinn einer Hysterese für die Schaltvorgänge verstanden werden

Die Schwierigkeit der Optimierung ergibt in diesem Zusammenhang anschaulich daraus, dass sich die einzelnen Kriterien zur Abstimmung der Getriebeeinrichtung gegenseitig beeinflussen und zum Teil gegenläufig sind.

Beispielsweise führt ein Herunterschalten bei einer niedrigeren Geschwindigkeit dazu, dass dieses Drehzahlverhältnis (Gang) bis zum Erreichen der Hochschaltlinie (28) länger aktiviert ist, dies ist insgesamt positiv für diesen Kennwert. Ebenso führt diese Verschiebung der Herunterschaltkennlinie aber auch dazu, dass sich die Fahrzeugbeschleunigung verschlechtert, dies ist in der Regel aber negativ für einen anderen Kennwert.

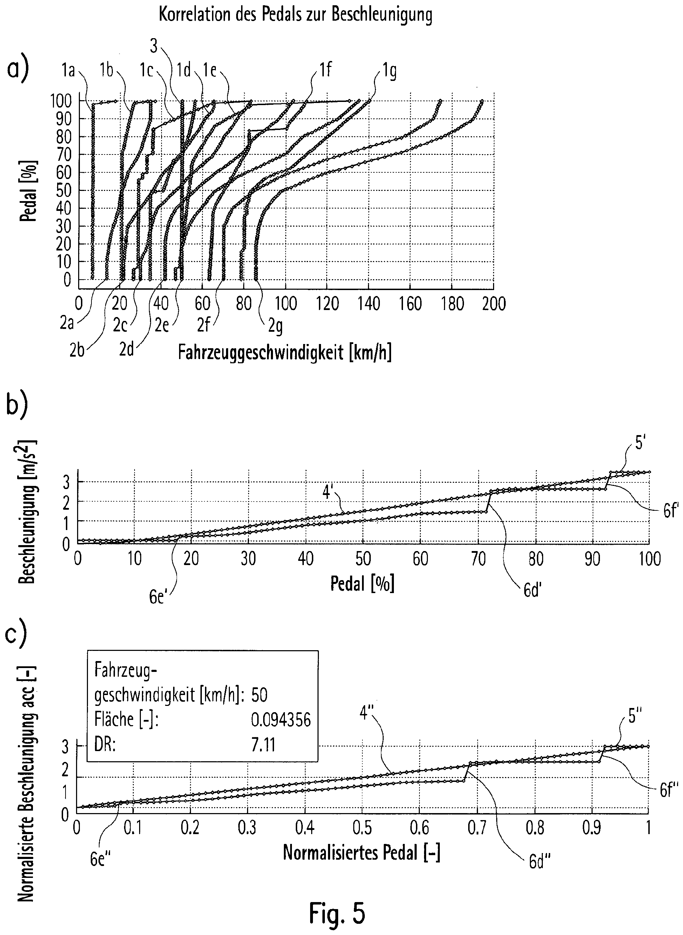

In Fig. 5 a) ist die Korrelation zwischen der Gaspedalstellung (Pedal [%]) und der Fahrzeuggeschwindigkeit (Vehicle Speed [kph]) für einen Antriebsstrang mit einem 8 Gang Automatikgetriebe mit Drehmomentwandler dargestellt. Dabei repräsentiert die Pedalstellung den Fahrleistungswunsch des Fahrers, d.h. bei Pedalposition = 100% ruft der Fahrer die in diesem Moment maximal zur Verfügung stehende Leistung von der Antriebseinheit ab, bei Pedalposition = 0% wird keine Antriebsleistung abgerufen, d.h. das Fahrzeug befindet sich im Stillstand oder im Schubbetrieb. Bei Pedal = 100% wird das Fahrzeug ausgehend von seiner aktuellen Fahrgeschwindigkeit solange beschleunigen, bis die Fahrpedalstellung geändert oder die Fahrzeug-Endgeschwindigkeit erreicht ist. Weiter dargestellt sind in diesem Diagramm die Schaltlinien für das Hochschalten (1a - 1g) des Getriebes und für das Herunterschalten (2a - 2g).

Die Schaltlinie 1a repräsentiert dabei die Zeitpunkte für den Gangwechsel vom 2. in den 1. Gang, die Schaltlinie 1b repräsentiert die Zeitpunkte für den Gangwechsel vom 3. in den 2. Gang, usw.. Entsprechend repräsentiert die Schaltlinie 2a die Zeitpunkte für den Gangwechsel vom 1. in den 2. Gang, die Schaltlinie 2b die Zeitpunkte für den Gangwechsel vom 2. in den 3. Gang, usw.. Entsprechend aus Fig. 5 a) ableitbar, dass rechts von der Schaltlinie 2f immer der letzte Gang, vorliegend also der 8. Gang, eingelegt ist.

In Fig. 5 b) ist der Sollwert-Verlauf 4' für die Fahrzeugbeschleunigung vorgegeben, dieser ist als linear von der Gaspedalstellung (Pedal [%]) abhängig angegeben. Die Zielvorgabe 4 ergibt sich damit als Gerade. Da der Antriebsmotor einerseits ein von der Drehzahl abhängiges, veränderbares Drehmoment aufweist und andererseits das nutzbare Drehzahlband des als Antriebsmotor verwendeten Verbrennungsmotors relativ schmal ist, wird die vom Antriebsmotor abgebbare Antriebsleistung mittels einer Getriebeeinrichtung an die Fahrleistungsanforderung, welche sich aus den Fahrwiderständen ergibt, angepasst. Dabei ist es das Ziel, den Antriebsstrang und damit auch das Automatikgetriebe so zu gestalten und zu steuern, dass die tatsächliche Fahrzeugbeschleunigung 5' möglichst mit der Zielvorgabe 4' zusammenfällt oder sich ein geringer Unterschied zwischen diesen ergibt. Die Fahrgeschwindigkeit 50 km/h ist in der Figur 5 a) als vertikale Linie 3 widergegeben, die Figuren 5 a) und 5 b) sind ausschließliche Darstellungen für diese Fahrgeschwindigkeit.

Es ist nun aus Figur 5 a) erkennbar, dass bei der Fahrgeschwindigkeit 3 der 5. Gang eingelegt ist. Betätigt der Fahrer zu einem solchen Zeitpunkt das Gaspedal zu ca. 17%, indiziert die Getriebesteuerung eine Rückschaltung und das Automatikgetriebe schaltet vom 5. in den 4. Gang zurück, wie dies im Schaltpunkt 6e gekennzeichnet ist. Durch diese Rückschaltung erhöht sich das an die Räder des Fahrzeugs abgebbare Antriebsdrehmoment. Die Drehzahl der Antriebsräder bleibt zunächst unverändert und die zur Verfügung stehende Antriebsleistung steigt sprungartig an. Dieser sprungartige Anstieg 6e' in der Kennlinie 5' spiegelt den Sprung in der Fahrzeugbeschleunigung wieder. Wünscht der Fahrer eine noch stärkere Beschleunigung, betätigt er also das Fahrpedal über eine Fahrpedalstellung von ca. 70%, wird eine weitere Rückschaltung 6d vom Automatikgetriebe ausgeführt, d.h. vom 4. in den 3. Gang zurückgeschaltet. Auch dies ergibt einen Sprung 6d' in der tatsächlichen Fahrzeugbeschleunigung. Dabei kann die Sollwertvorgabe für die Beschleunigung 4' unmittelbar nach dem Schaltvorgang kurzfristig aufgrund der Drehzahl/Drehmoment-Charakteristik des Drehmomentwandlers übertroffen werden. Fordert der Fahrer die maximale oder nahezu maximale Beschleunigung vom Fahrzeug ab, betätigt er also das Fahrpedal zu ca. 90% oder darüber hinaus, führt das Automatikgetriebe eine weitere Rückschaltung 6f aus. Dabei wird im Automatikgetriebe statt dem 3. der 2. Gang eingelegt. Auch hier kann die Sollbeschleunigung von der tatsächlichen Fahrzeugbeschleunigung kurzfristig übertroffen werden.

In der Figur 5 c) ist die tatsächliche Fahrzeugbeschleunigung (Fig. 5 b), 5') in normalisierter Form 5" (Wertebereich, 0-1) über der normalisierten Fahrpedalstellung 4" (Wertebereich, 0-1) dargestellt. In dieser Darstellung ergibt sich das Verhältnis zwischen normalisierter Sollbeschleunigung 4" und normalisierter Fahrzeugbeschleunigung 5", wie dieses im Prinzip schon aus Fig. 5 b) für die nicht normalisierten Größen bekannt ist. Die Darstellung ist für weitere Vergleiche und Optimierungen der Getriebesteuerung und des Getriebes einfacher zu handzuhaben. Die Schaltpunkte (6e", 6d", 6f") sind ebenso mit Sprüngen in der Fahrzeugbeschleunigung erkennbar wie in der nicht normalisierten Darstellung.

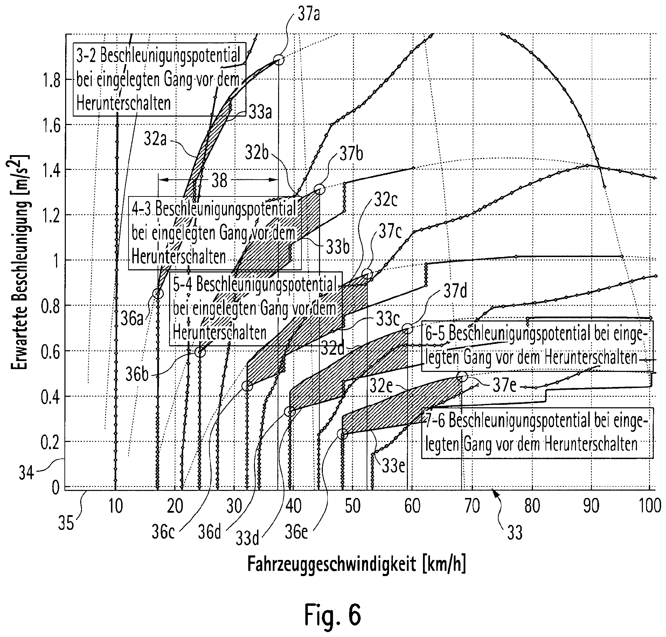

In Figur 6 sind die Zusammenhänge aus Beschleunigung 34 und Fahrzeuggeschwindigkeit 35, sowie den Schaltkennlinien 33a bis 33e für die Bewertung des Beschleunigungspotentials eines Fahrzeugs dargestellt.

In diesem Sinn ist unter dem Beschleunigungspotential die Eigenschaft zu verstehen, das Fahrzeug ohne eine Zurückschaltung zu beschleunigen. Viele Fahrer empfinden es als angenehm, wenn das Fahrzeug unter Ausnutzung des Drehmoments der Antriebseinrichtung und ohne Rückschaltung in der Getriebeeinrichtung beschleunigt. Dies ist in der Regel mit drehmomentstarken Antriebseinrichtungen einfacher zu realisieren als mit drehmomentschwachen Antriebseinrichtungen.

Trotz dieser Abhängigkeit vom Drehmoment der Antriebseinrichtung kommt auch der Abstufung und Steuerung der Getriebeeinrichtung eine hohe Bedeutung bei dieser Fahrzeugeigenschaft und bei der Ermittlung eines Kennwerts zu.

Das Beschleunigungspotential des Fahrzeugs ist einerseits von der Vollastbeschleunigung des Fahrzeugs und andererseits von der Rückschaltung in ein niedrigeres Drehzahlverhältnis bestimmt. Die Vollastbeschleunigung bestimmt in diesem Zusammenhang die maximal mögliche Beschleunigung bei 100% Fahrpedalstellung und hängt also einerseits von der Fahrgeschwindigkeit 33 und andererseits vom aktivierten Drehzahlverhältnis (1. bis n-ter Gang) ab. Für die Vollastbeschleunigung ergeben sich somit die Vollastbeschleunigungskennlinien 32a bis 32e.

Bei der Fahrzeugbeschleunigung ist grundsätzlich zwischen einer Kickdown-Beschleunigung und einer Risingpedal-Beschleunigung zu unterscheiden. Bei der Kickdown-Beschleunigung wird die Fahrpedalstellung unmittelbar auf einen Wert von 100% eingestellt, in der Getriebeeinrichtung wird damit in der Regel wenigstens eine Herunterschaltung ausgelöst. Mit der Herunterschaltung steigt die Drehzahl der Antriebseinrichtung und in der Regel auch die in das System einbringbare Antriebsleistung und Beschleunigung. Eine solche Kickdown-Beschleunigung bleibt hier außer Betracht.

Bei der Risingpedal-Beschleunigung wird das Fahrpedal langsamer auf einen Wert < 100% eingestellt und das Fahrzeug beschleunigt dann, ohne eine Herunterschaltung. Diese Art der Beschleunigung wird für den hier vorgeschlagenen Kennwert herangezogen.

Die Herunterschaltungen werden durch die Herunterschaltkennlinien 33a bis 33e angegeben, aus dem Zusammenhang zwischen den Vollastbeschleunigungskennlinien 32a bis 32e und den Herunterschaltkennlinie 33a bis 33e lassen sich die Beschleunigungspotentiale ableiten. Durch die Berechnung des Flächeninhalts zwischen einer Vollastbeschleunigungslinie (32a bis 32e) und der zugehörigen Herunterschaltkennlinie (33a bis 33e) ist es möglich einen Kennwert zu ermitteln, der die quantitative Beurteilung des Beschleunigungspotentials bei der Risingpedal-Beschleunigung.

Die Berechnung des Beschleunigungspotentials vor dem Herunterschalten geht anschaulich von der niedrigsten Geschwindigkeit aus, bei welcher ein bestimmtes Drehzahlverhältnis (gerade) noch aktiviert ist. Würde also das Fahrzeug weiter an Geschwindigkeit verlieren, so würde in der Getriebeeinrichtung eine Herunterschaltung initiiert. Ausgehend von diesen Geschwindigkeiten 36a bis 36e wird das Beschleunigungspotential bis zu den jeweils dazugehörenden Geschwindigkeiten 37a bis 37e bestimmt. Die Geschwindigkeiten 37a bis 37e sind jeweils um die Geschwindigkeit 38, vorliegend 20 km/h, höher als die Geschwindigkeiten 36a bis 36e. Die Fahrzeugbeschleunigung kann an der Abszisse 34 und die Fahrzeuggeschwindigkeit an der Ordinate 33 abgelesen werden.

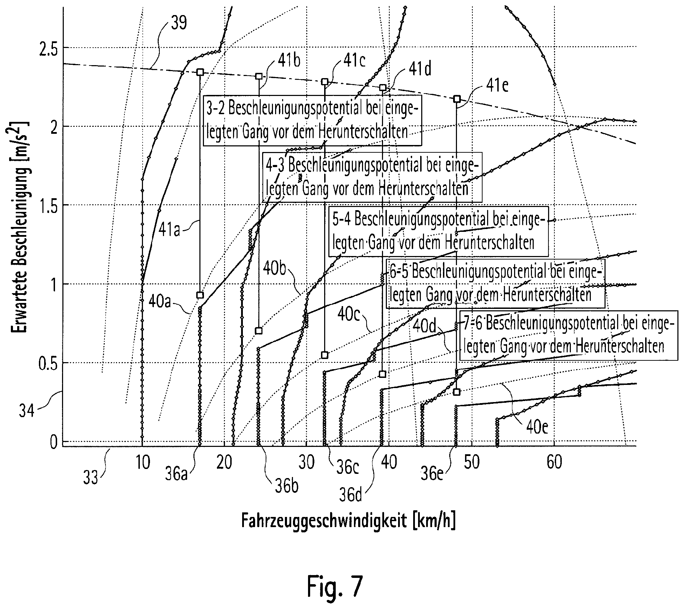

Wie in der Figur 6, so ist auch in der Figur 7, die Fahrzeugbeschleunigung 34 über der Fahrzeuggeschwindigkeit 33 aufgetragen. Aus dieser Darstellung lässt sich ein weiterer wichtiger Kennwert für das Beschleunigungspotential, in diesem Fall das absolute Beschleunigungspotential, vor dem Herunterschalten bestimmen.

Für die Beurteilung der Getriebeeinrichtung wird das vom Fahrzeug, unabhängig vom aktivierten Drehzahlverhältnis erreichbare Beschleunigungspotential, für die wie zuvor ermittelten Geschwindigkeiten 36a bis 36e, bestimmt. Im Gegensatz zum Beschleunigungspotential (Figur 6) muss für die Berechnung des absoluten Beschleunigungspotentials kein Geschwindigkeitsbereich (Figur 6, Bz.38) vorgegeben werden.

Die Grundsituationen (Figur 6, Figur 7) sind ähnlich, für die Berechnung wird bei der niedrigsten, für ein bestimmtes Drehzahlverhältnis möglichen, Geschwindigkeit durchgeführt. D.h. eine weitere Verringerung der Fahrzeuggeschwindigkeit, ausgehend von diesen Geschwindigkeiten (36a bis 36e), würde zu einer Herunterschaltung in der Getriebeeinrichtung führen.

Zusätzlich ist die Zielfunkton/Referenzfunktion für die Fahrzeugbeschleunigung 39 aufgetragen, diese Beschleunigung ist unabhängig vom aktivierten Drehzahlverhältnis und kann beispielsweise aus einer Analyse von bereits vorhandenen Fahrzeugen abgeleitet werden, dabei ist es bevorzugt, dass das durch die Zielfunktion vorgegebene Beschleunigungspotential größer ist als das Beschleunigungspotential der vorhandenen Fahrzeuge. Die absolute Fahrzeugbeschleunigung 39 wird mit der in dem jeweiligen Drehzahlverhältnis erreichbaren Fahrzeugbeschleunigung 40a bis 40e bei den Geschwindigkeiten 36a bis 36e verglichen.

Aus diesem Vergleich werden die absoluten Beschleunigungspotentiale 41a bis 41e bestimmt und ein Kennwert wird nach den dazugehörenden Rechenvorschriften abgeleitet.

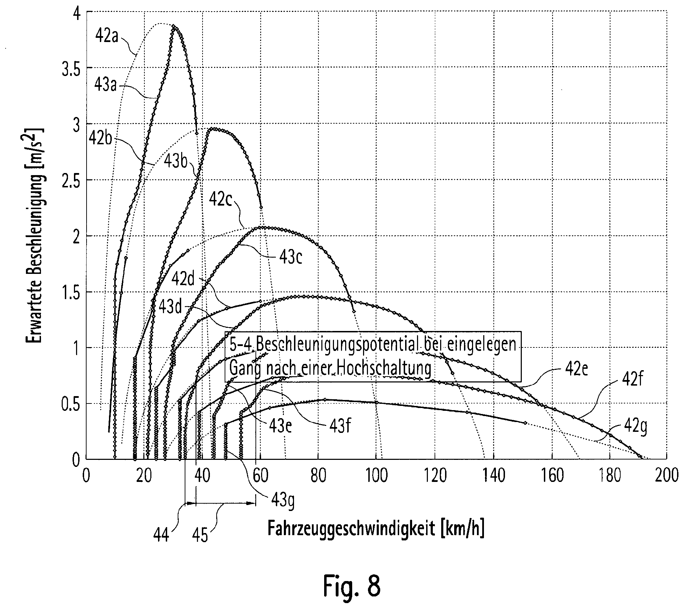

In Figur 8 ist eine Grafik dargestellt, auf deren Basis ein weiterer Kennwert gebildet wird, in diesem Fall der Kennwert für das Beschleunigungspotential nach einer Hochschaltung. Für die Ermittlung dieses Kennwerts startet die Berechnung mit einem kurzen Versatz 44 nach einer Hochschaltung (Hochschaltpunkt + 4 km/h), und endet mit Ende des Berechnungszeitraums 45, wobei der Berechnungszeitraum hier mit 20 km/h vorgegeben ist.

Die relevanten Hochschaltpunkte ergeben sich durch die frei konfigurierbaren Hochschaltkennlinien (43a bis 43f). Die mit der Antriebseinrichtung in einem bestimmten Drehzahlverhältnis erreichbare Beschleunigung ist durch die Kennlinie 42a bis 42g angegeben. In diesem Zusammenhang bedeutet unmittelbar nach der Hochschaltung, 4 km/h (44) nach dieser. Diese Berechnung endet ebenso, wie die Berechnung für den Kennwert für das Beschleunigungspotential vor dem Herunterschalten (Figur 7), nach einer bestimmten Differenzgeschwindigkeit (45). Im vorliegenden Fall ist der Berechnungsintervall 20 km/h lang.

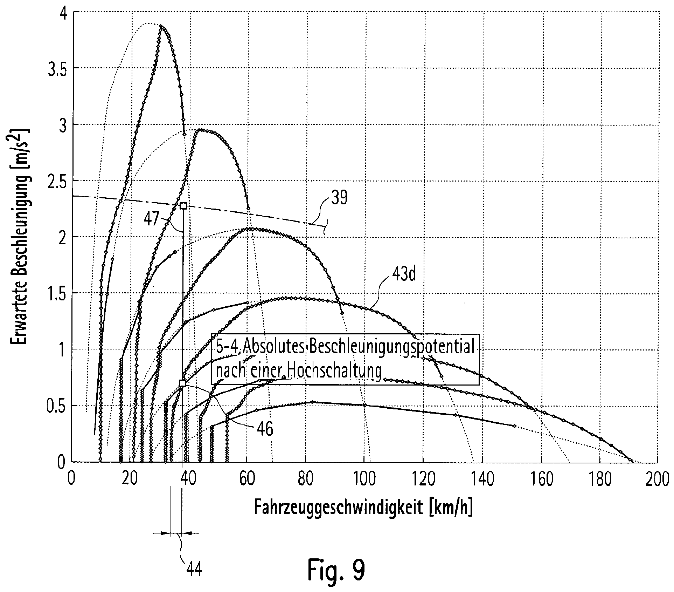

In Figur 9 ist eine Grafik zur Ermittlung des absoluten Beschleunigungspotentials nach einer Hochschaltung angegeben. Dabei entspricht die Figur 9 im Wesentlichen der Figur 8, so dass hier weitgehend auf die Unterschiede dieser Figuren eingegangen wird. Der Hochschaltpunkt 46 liegt auf der Hochschaltkennlinie 43d. Zusätzlich ist die Zielfunktion/Referenzfunktion für die Fahrzeugbeschleunigung 39 vorgegeben. Wie dargelegt bezieht sich diese auf Beschleunigungen, welche bei niedrigen Drehzahlen der Antriebseinrichtung erreichbar sind, weshalb die tatsächlich erreichbare Fahrzeugbeschleunigung bei höheren Drehzahlen, hier 1. und 2. Gang, über dieser Zielfunktion liegen kann. Der Abstand 47 zwischen der Referenzfunktion/Zielfunktion 39 und dem Hochschaltpunkt ist ein Maß für das absolute Beschleunigungspotential des Fahrzeugs, insbesondere bei niedriger Drehzahl der Antriebseinrichtung, und kann mittels der vorgeschlagenen Rechenvorschriften quantifiziert werden.

Entsprechend der Figur 7, ist auch in der Figur 9 die Berechnung mehrerer absoluter Beschleunigungspotential ermöglicht, diese einzelnen absoluten Beschleunigungspotential sind zu Gunsten einer besseren Übersichtlichkeit in dieser Figur nicht dargestellt.

## Patentansprüche

1. Verfahren zur Ermittlung wenigstens einer Kenngröße zur Bewertung oder Optimieren einer zwischen einem ersten und wenigstens einem zweiten Drehzahlverhältnis umschaltbaren Getriebeeinrichtung für ein Kraftfahrzeug, welche wenigstens ein Getriebe-Eingangselement und wenigstens ein Getriebe-Ausgangselement aufweist, und welche mit wenigstens einer Antriebseinheit drehmomentleitend verbindbar ist, die eine Vielzahl möglicher Betriebspunkte aufweist, die wenigstens durch das von der Antriebseinheit abgegebene oder aufgenommene Drehmoment und die Drehzahl charakterisiert sind, und bei welchem ein Getriebesteuergerät vorgesehen ist, welches die Schaltvorgänge des Getriebes in Abhängigkeit des jeweiligen Betriebspunktes und gegebenenfalls in Abhängigkeit von weiteren Parametern steuert, welche konstante und/oder variable Eigenschaften eines Kraftfahrzeuges und dessen Umgebung beschreiben,

   durch eine vorgegebene, konstante oder veränderbare, Sollwertvorgabe Änderungen des Betriebspunktes der Antriebseinheit bewirkt und damit Schaltvorgänge in der Getriebeeinrichtung herbeigeführt werden;
   wobei der Verlauf wenigstens eines Ausgangsparameters vor und/oder während und/oder nach dem Schaltvorgang ermittelt, insbesondere gemessen, wird, der für das Drehzahlverhalten dieses wenigstens einen Getriebe-Ausgangselements charakteristisch ist ;
   wobei dieser Verlauf dieses Ausgangsparameters mit einem vorgegebenen, insbesondere idealen, Ausgangsparameter-Verlauf verglichen
   und wobei aus den Abweichungen wenigstens eine Kenngröße ermittelt wird, welche für diese Abweichungen repräsentativ ist,
   **dadurch gekennzeichnet,**
   **dass** zur Berechnung eines Kennwerts (Hochschalt-Drehzahlverhalten-Kennwert) die Drehzahl des Getriebeeingangselements , insbesondere vor und nach einem Schaltvorgang, während eines Beschleunigungsvorgangs des Fahrzeugs erfasst wird,
   wobei für den Beschleunigungsvorgang die Stellung des Fahrpedals konstant gehalten wird,
   **dass** für wenigstens zwei aufeinanderfolgende Schaltvorgänge eine erste Drehzahldifferenz aus den Drehzahlen vor dem Schaltvorgang gebildet wird,
   wobei für wenigstens zwei aufeinanderfolgende Schaltvorgänge eine zweite Drehzahldifferenz aus den Drehzahlen nach dem Schaltvorgang gebildet wird,
   wobei aus diesen ersten und zweiten Drehzahldifferenzen eine gemittelte Drehzahldifferenz gebildet wird, und
   wobei aus dieser gemittelten Drehzahldifferenz ein Kennwert für das Hochschalt-Drehzahlverhalten der Getriebeeinrichtung abgeleitet wird, **oder**
   **dass** zur Berechnung eines Kennwerts (Hochschalt-Gangzeit-Kennwert) das Fahrzeug einen Beschleunigungsvorgang ausführt,

wobei für diesen Beschleunigungsvorgang die Fahrpedalstellung konstant vorgegeben wird und so gewählt ist, dass wenigstens zwei Schaltvorgänge zwischen Drehzahlverhältnissen der Getriebeeinrichtung durchgeführt werden,

wobei die Zeitspannen erfasst werden welche die Drehzahlverhältnisse jeweils aktiviert sind,

wobei die Zeitspanne, welche ein einzelnes Drehzahlverhältnis aktiviert ist, in Beziehung gesetzt wird zu der längsten Zeitspanne, welche ein Drehzahlverhältnis aktiviert ist, und

wobei daraus ein Kennwert für die Hochschalt-Gangzeit der Getriebeeinrichtung abgeleitet wird,

**oder**

**dass** zur Berechnung eines Kennwerts (Drehzahlverhältnis-Aktiv-Kennwert) die Fahrpedalstellung als konstant vorgegeben wird,

wobei die Fahrpedalstellung eine Fahrzeugbeschleunigung bewirkt und so gewählt ist, dass die Getriebeeinrichtung aufgrund der Pedalstellung einen Herunterschaltvorgang ausführt,

wobei die Zeit erfasst wird, bis die Getriebeeinrichtung einen Hochschaltvorgang ausführt,

wobei aus dieser erfassten Zeit ein Kennwert (Drehzahlverhältnis-Aktiv-Kennwert) für die Dauer abgeleitet wird, wie lange ein Drehzahlverhältnis aktiviert ist.

2. Verfahren nach Anspruch 1 zur Berechnung eines Kennwerts (Beschleunigungspotential-vor Herunterschalten-Kennwert),
**dadurch gekennzeichnet, dass**

zunächst eine erste Geschwindigkeit für das Fahrzeug vorgegeben wird, welche so gewählt ist, dass beim Absinken dieser Geschwindigkeit unmittelbar ein Herunterschaltvorgang von der Getriebeeinrichtung ausgeführt wird,

dass die Bestimmung des Kennwerts ausgehend von dieser ersten Geschwindigkeit bis zum Erreichen einer zweiten vorgebbaren Geschwindigkeit ausgeführt wird,

dass die mit der Antriebseinheit für die Fahrzeuggeschwindigkeit erreichbare maximal mögliche Fahrzeugbeschleunigung bestimmt wird, dass diese mit der für das Fahrzeug unter Berücksichtigung der Getriebeeinrichtung erreichbaren Beschleunigung verglichen wird,

dass aus diesem Vergleich ein Kennwert (Beschleunigungspotential-vor Herunterschalten-Kennwert) für das Beschleunigungspotential vor dem Herunterschalten abgeleitet wird.

3. Verfahren gemäß einem der vorhergehenden Ansprüche zur Berechnung eines Kennwerts (Absolutes Beschleunigungspotential-vor Herunterschalten-Kennwert),
**dadurch gekennzeichnet, dass**

die erste Geschwindigkeit für das Fahrzeug vorgegeben wird,

dass für die erste Geschwindigkeit die maximal von der Antriebseinheit abrufbare Antriebsleistung berechnet und dass daraus eine erreichbare Fahrzeugbeschleunigung abgeleitet wird,

dass die mit der maximalen Antriebsleistung der Antriebseinheit mögliche Beschleunigung bei dieser ersten Geschwindigkeit berechnet wird,

dass die erreichbare und die mögliche Beschleunigung miteinander verglichen werden,

dass aus diesem Vergleich ein Kennwert (Abs. Beschleunigungspotential-vor Herunterschalten-Kennwert) für das absolute Beschleunigungspotential vor dem Herunterschalten abgeleitet wird.

4. Verfahren gemäß einem der vorhergehenden Ansprüche zur Berechnung eines Kennwerts (Beschleunigungspotential-nach Hochschalten-Kennwert),
**dadurch gekennzeichnet, dass**

ein erster Fahrzustand vorgegeben wird, der sich dadurch auszeichnet dass sich das Fahrzeug wenigstens im Wesentlichen unmittelbar nach einem Hochschaltvorgang befindet,

dass die Bestimmung des Kennwerts ausgehend von diesem ersten Fahrzustand bis zum Erreichen eines zweiten vorgebbaren Fahrzustandes, welcher sich insbesondere durch eine höhere Fahrzeuggeschwindigkeit auszeichnet, ausgeführt wird,

dass die mit der Antriebseinheit erreichbare maximal mögliche Fahrzeugbeschleunigung in Abhängigkeit von der Fahrzeuggeschwindigkeit bestimmt wird,

dass diese mit der für das Fahrzeug unter Berücksichtigung der Getriebeeinrichtung erreichbaren Beschleunigung verglichen wird,

dass aus diesem Vergleich ein Kennwert (Beschleunigungspotential-nach Hochschalten-Kennwert) für das Beschleunigungspotential nach dem Hochschalten abgeleitet wird.

5. Verfahren gemäß einem der vorhergehenden Ansprüche zur Berechnung eines Kennwerts (Absolutes Beschleunigungspotential-nach Hochschalten-Kennwert),
**dadurch gekennzeichnet, dass**

der erste Fahrzustand für das Fahrzeug vorgegeben wird,
dass für den erste Fahrzustand die maximal von der Antriebseinheit abrufbare Antriebsleistung berechnet und dass daraus eine erreichbare Fahrzeugbeschleunigung abgeleitet wird,
dass die mit der maximalen Antriebsleistung der Antriebseinheit mögliche Beschleunigung bei dieser ersten Geschwindigkeit berechnet wird,
dass die erreichbare und die mögliche Beschleunigung miteinander verglichen werden,
dass aus diesem Vergleich ein Kennwert (Abs. Beschleunigungspoten tial-nach Hochschalten-Kennwert) für das absolute Beschleunigungspotential nach dem Hochschalten abgeleitet wird.

6. Verfahren nach einem der vorhergehenden Ansprüchen, **dadurch gekennzeichnet dass**

wenigstens ein Gesamtkennwert $DR_p$ aus wenigstens zwei Kennwerten $DR_{final}$ oder $DR_{base}$ für die Getriebeeinrichtung gebildet wird,
dass der Gesamtkennwert durch eine Summenbildung aus n einzelnen Werten/Kennwerten berechnet wird,
dass die einzelnen Kennwerte mit einer Gewichtungsfunktion p potenziert werden, dass der Gesamtkennwert der Rechenvorschrift

$$DR_p(DR_1, DR_2, .. DR_n) = 11 - \left( \frac{1}{n} \sum_{i=1}^{n} (11 - DR_i)^p \right)^{\frac{1}{p}}$$

genügt.

7. Verfahren nach Anspruch 8, **dadurch gekennzeichnet, dass** ein Globalkennwert $DR_{pg}$ für die Getriebeeinrichtung aus I, wenigstens aber aus zwei, Gesamtkennwerten $DR_p$ bestimmt wird, und dass der Globalkennwert der Rechenvorschrift

$$DR_{pg} = 11 - \left( \frac{1}{\sum_{k=1}^{l} w_k} \cdot \sum_{k=1}^{l} w_k \cdot (11 - DR_k)^p \right)^{\frac{1}{p}}$$

genügt.

8. Verfahren nach einem der vorhergehenden Ansprüche, **dadurch gekennzeichnet, dass** zur Optimierung der Getriebeeinheit wenigstens ein Kennwert, Gesamtkennwert oder Globalkennwert herangezogen wird, und dass zur Berechnung dieses wenigstens einen Kennwerts Parameter der Getriebeeinrichtung nach der Methode der Differential Evolution variiert werden.

**Claims**

1. Method for determining at least one characteristic variable for evaluating or optimizing a transmission device, which can be switched between a first and at least a second speed ratio, for a motor vehicle, which transmission device has at least one transmission input element and at least one transmission output element, and which transmission device can be connected in a torque-conducting manner to at least one drive unit which has a multiplicity of possible operating points which are characterized at least by the torque emitted or absorbed by the drive unit and by the speed, and for which a transmission control unit is provided which controls the shifting operations of the transmission as a function of the respective operating point and, if appropriate, as a function of further parameters which describe constant and/or variable properties of a motor vehicle and its environment,

wherein changes in the operating point of the drive unit are brought about by a predetermined, constant or variable setpoint specification and thus shifting operations are brought about in the transmission device; wherein the course of at least one output parameter is determined, in particular measured, before and/or during and/or after the shifting process, which is characteristic of the speed behavior of this at least one transmission output element;

wherein this variation of this output parameter being compared with a predetermined, in particular ideal, output parameter variation, and wherein at least one characteristic variable being determined from the deviations, which characteristic variable is representative of these deviations,

**characterized in that**

**in that** the rotational speed of the transmission input element, in particular before and after a shifting operation, is recorded during an acceleration operation of the vehicle in order to calculate a characteristic value (Hochschalt-Drehzahlverhalten-Kennwert) ,

the position of the accelerator pedal being kept constant for the acceleration process,

**in that** a first rotational speed difference is formed from the rotational speeds before the shift process for at least two successive shift processes,

**in that** for at least two successive switching operations a second speed difference is formed from the speeds after the switching operation, wherein an averaged speed difference being formed from these first and second speed differences, and

wherein a characteristic value for the upshift speed behavior of the transmission device being derived from this averaged speed difference, **or**

**in that** for calculating a characteristic value (Hochschalt-Gangzeit-Kennwert) the vehicle executes an acceleration process,

wherein for this acceleration process the accelerator pedal position is predetermined to be constant and is selected in such a way that at least two shifting processes are carried out between speed ratios of the transmission device,

wherein the time periods are detected which the speed ratios are activated in each case,

wherein the time period which a single speed ratio is activated is related to the longest time period which a speed ratio is activated, and

wherein a characteristic value for the upshift gear time of the transmission device is derived therefrom, **or**

**in that** the accelerator pedal position is specified as constant for calculating a characteristic value (Drehzahlverhaltnis-Aktiv-Kennwert), the accelerator pedal position causing a vehicle acceleration and being selected such that the transmission device executes a downshift on the basis of the pedal position,

wherein the time until the transmission device executes an upshift is detected,

wherein a characteristic value (Drehzahlverhaltnis-Aktiv-Kennwert) for the duration for which a speed ratio is activated is derived from this detected time.

2. Method according to claim 1 for calculating a characteristic value (acceleration potential-before-downshift characteristic value),
**characterized in that**

initially a first speed is specified for the vehicle,
which is selected in such a way that when this speed drops a downshifting operation is carried out immediately by the transmission device,

**in that** the determination of the characteristic value is carried out starting from this first speed until a second specifiable speed is reached,

**in that** the maximum possible vehicle acceleration achievable with the drive unit for the vehicle speed is determined,

**in that** this is compared with the acceleration achievable for the vehicle taking into account the transmission device,

**in that** a characteristic value (Beschleunigungspotential-vor Herunterschalten-Kennwert) for the acceleration potential before the downshift is derived from this comparison.

3. Method according to any one of the preceding claims for calculating a characteristic value (absolute acceleration potential-before-downshift characteristic value),

**characterized in that**

the first speed for the vehicle is predetermined,
**in that** the maximum drive power which can be called up by the drive unit is calculated for the first speed, and
**in that** an achievable vehicle acceleration is derived therefrom,
**in that** the acceleration which is possible with the maximum drive power of the drive unit at this first speed is calculated,
**in that** the achievable acceleration and the possible acceleration are compared with one another,
**in that** a characteristic value (Abs. Beschleunigungspotential-vor Herunterschalten-Kennwert) for the absolute acceleration potential before downshifting is derived from this comparison.

4. Method according to any one of the preceding claims for calculating a characteristic value (Beschleunigungspotential-nach Hochschalten-Kennwert),
**characterized in that**

a first driving state is predefined, which is **characterized in that** the vehicle is at least substantially immediately after an upshift,
**in that** the determination of the characteristic value is carried out starting from this first driving state until a second predefinable driving state is reached, which is **characterized in** particular by a higher vehicle speed,
**in that** the maximum possible vehicle acceleration achievable with the drive unit is determined as a function of the vehicle speed,
**in that** this is compared with the acceleration achievable for the vehicle taking into account the transmission device,
**in that** a characteristic value (Beschleunigungspotential-nach Hochschalten-Kennwert) for the acceleration potential after the upshift is derived from this comparison.

5. Method according to any one of the preceding claims for calculating a characteristic value (Absolutes Beschleunigungspotential-nach Hochschalten-Kennwert),
**characterized in that**

the first driving state for the vehicle is predefined,
**in that** the maximum drive power which can be called up by the drive unit is calculated for the first driving state, and **in that** an achievable vehicle acceleration is derived therefrom,
**in that** the acceleration
which is possible with the maximum drive power of the drive unit at this first speed is calculated,
**in that** the achievable and the possible acceleration are compared with one another,
**in that** this comparison is used to calculate a characteristic value (Abs. Beschleunigungspotential-nach Hochschalten-Kennwert) or the absolute acceleration potential after the upshift is derived.

6. Method according to one of the preceding claims, **characterized in that** at least one overall characteristic value $DR_p$ is formed from at least two characteristic values $DR_{final}$ or $DR_{base}$ for the transmission device,

**in that** the overall characteristic value is calculated by summing n individual values/characteristic values,
**in that** the individual characteristic values are raised to the power of a weighting function p, **in that** the overall characteristic value satisfies the calculation rule

$$DR_p(DR_1, DR_2, .. DR_n) = 11 - \left( \frac{1}{n} \sum_{i=1}^{n} (11 - DR_i)^p \right)^{\frac{1}{p}}$$

satisfies.

7. Method according to claim 8, **characterized in that** a global characteristic value $DR_{pg}$ for the transmission device is determined from I, but at least from two, total characteristic values $DR_p$, and **in that** the global characteristic value satisfies the calculation rule

$$DR_{pg} = 11 - \left( \frac{1}{\sum_{k=1}^{l} w_k} \cdot \sum_{k=1}^{l} w_k \cdot (11 - DR_k)^p \right)^{\frac{1}{p}}.$$

**8.** Method according to one of the preceding claims, **characterized in that** at least one characteristic value, total characteristic value or global characteristic value is used to optimize the transmission unit, and
**in that** parameters of the transmission device are varied according to the method of differential evolution to calculate this at least one characteristic value.

**Revendications**

**1.** Procédé de détermination d'au moins une grandeur caractéristique pour évaluer ou optimiser un dispositif de transmission pouvant être commuté entre un premier et au moins un deuxième rapport de vitesse de rotation pour un véhicule à moteur, lequel présente au moins un élément d'entrée de transmission et au moins un élément de sortie de transmission et lequel peut être raccordé en transmission de couple de rotation à au moins une unité d'entraînement, qui présente une multitude de points de fonctionnement possibles qui sont caractérisés au moins par le couple de rotation fourni ou absorbé par l'unité d'entraînement et par la vitesse de rotation, et où un appareil de commande de transmission est prévu, lequel commande les processus de changement de vitesse de la transmission en fonction du point de fonctionnement respectif et éventuellement en fonction d'autres paramètres, lesquels décrivent des caractéristiques constantes et/ou variables d'un véhicule à moteur et son environnement,

dans lequel par une spécification de valeur théorique spécifiée, constante ou variable, des modifications du point de fonctionnement de l'unité d'entraînement sont déclenchées, ce qui a pour effet d'entraîner des processus de changement de vitesse dans le dispositif de transmission ;
dans lequel l'évolution d'au moins un paramètre de sortie est déterminée, en particulier est mesurée, avant et/ou pendant et/ou après le processus de changement de vitesse, qui est caractéristique du comportement de vitesse de rotation dudit au moins un élément de sortie de transmission ;
dans lequel ladite évolution dudit paramètre de sortie est comparée à une évolution de paramètre de sortie spécifiée, en particulier idéale,
et dans lequel est déterminée, à partir des écarts, au moins une grandeur caractéristique, laquelle est représentative desdits écarts,
**caractérisé en ce**
**que** la vitesse de rotation de l'élément d'entrée de transmission est détectée pendant un processus d'accélération du véhicule, en particulier avant et après un processus de changement de changement, pour calculer une valeur caractéristique (Hochschalt-Drehzahlverhalten-Kennwert),
dans lequel la position de l'accélérateur est maintenue constante pour le processus d'accélération,
**qu'**une première différence de vitesse de rotation issue des vitesses de rotation avant le processus de changement de vitesse est obtenue pour au moins deux processus de changement de vitesse se suivant,
dans lequel une deuxième différence de vitesse de rotation issue des vitesses de rotation après le processus de changement de vitesse est obtenue pour au moins deux processus de changement de vitesse se suivant,
dans lequel une différence de vitesse de rotation pondérée est obtenue à partir desdites première et deuxième différences de vitesse de rotation, et
dans lequel une valeur caractéristique pour le comportement de vitesse de rotation de passage à la vitesse supérieure du dispositif de transmission est déduite à partir de ladite différence de vitesse de rotation pondérée,
**ou**
**que** le véhicule exécute un processus d'accélération pour calculer une valeur caractéristique (Hochschalt-Gangzeit-Kennwert),
dans lequel la position de l'accélérateur est spécifiée de manière constante pour ledit processus d'accélération et est choisie de telle sorte qu'au moins deux processus de changement de vitesse sont mis en œuvre entre des rapports de vitesse de rotation du dispositif de transmission,
dans lequel les intervalles de temps, pendant lesquels les rapports de vitesse de rotation sont respectivement activés, sont détectés,
dans lequel l'intervalle de temps, pendant lequel un rapport de vitesse de rotation individuel est activé, est mis en relation avec l'intervalle de temps le plus long, pendant lequel un rapport de vitesse de rotation est activé, et
dans lequel une valeur caractéristique est déduite sur cette base pour la durée de cycle de passage à la vitesse supérieure du dispositif de transmission,

ou

**que** la position de l'accélérateur est spécifiée comme étant constante pour calculer une valeur caractéristique (Drehzahlverhältnis-Aktiv-Kennwert),

dans lequel

la position de l'accélérateur entraîne une accélération du véhicule et est choisie de telle sorte que le dispositif de transmission exécute un processus de passage à la vitesse inférieure en raison de la position de l'accélérateur,

dans lequel le temps jusqu'à ce que le dispositif de transmission exécute un processus de passage à la vitesse supérieure est détecté,

dans lequel une valeur caractéristique (valeur caractéristique active de rapport de vitesse de rotation) est déduite à partir dudit temps détecté pour la durée pendant laquelle un rapport de vitesse de rotation est activé.

2. Procédé selon la revendication 1 pour le calcul d'une valeur caractéristique (Beschleunigungspotential-vor Herunterschalten-Kennwert),

**caractérisé en ce que**

en premier lieu une première vitesse est spécifiée pour le véhicule, laquelle est choisie de telle sorte qu'en cas de baisse de ladite vitesse, un processus de passage à la vitesse inférieure est directement exécuté par le dispositif de transmission,

que la définition de la valeur caractéristique est exécutée en partant de ladite première vitesse jusqu'à atteindre une deuxième vitesse pouvant être spécifiée,

que l'accélération du véhicule maximale possible pouvant être atteinte avec l'unité d'entraînement pour la vitesse du véhicule est définie,

que celle-ci est comparée à l'accélération pouvant être atteinte pour le véhicule en tenant compte du dispositif de transmission,

qu'une valeur caractéristique (Beschleunigungspotential-vor Herunterschalten-Kennwert) est déduite à partir de ladite comparaison pour le potentiel d'accélération avant le passage à la vitesse inférieure.

3. Procédé selon l'une quelconque des revendications précédentes pour calculer une valeur caractéristique (Absolutes Beschleunigungspotential-vor Herunterschalten-Kennwert),

**caractérisé en ce que**

la première vitesse est spécifiée pour le véhicule,

que la puissance d'entraînement pouvant être appelée au maximum par l'unité d'entraînement est calculée pour la première vitesse et qu'une accélération du véhicule pouvant être atteinte est déduite sur cette base,

que l'accélération possible avec la puissance d'entraînement maximale de l'unité d'entraînement est calculée pour ladite première vitesse,

que l'accélération pouvant être atteinte et l'accélération possible sont comparées l'une à l'autre,

qu'une valeur caractéristique (Absolutes Beschleunigungspotential-vor Herunterschalten-Kennwert) est déduite à partir de cette comparaison pour le potentiel d'accélération absolu avant le passage à la vitesse inférieure.

4. Procédé selon l'une quelconque des revendications précédentes pour calculer une valeur caractéristique (Beschleunigungspotential-nach Hochschalten-Kennwert), **caractérisé en ce que**

un premier état de déplacement est spécifié, qui se distingue **en ce que** le véhicule se trouve au moins sensiblement directement après un processus de passage à la vitesse supérieure,

que la définition de la valeur caractéristique est exécutée en partant dudit premier état de déplacement jusqu'à atteindre un deuxième état de déplacement pouvant être spécifié, lequel se distingue en particulier par une vitesse de véhicule plus élevée,

que l'accélération de véhicule possible au maximum pouvant être atteinte avec l'unité d'entraînement est définie en fonction de la vitesse du véhicule,

que celle-ci est comparée à l'accélération pouvant être atteinte pour le véhicule en tenant compte du dispositif de transmission,

qu'une valeur caractéristique (Beschleunigungspotential-nach Hochschalten-Kennwert) est déduite à partir de ladite comparaison pour le potentiel d'accélération après le passage à la vitesse supérieure.

5. Procédé selon l'une quelconque des revendications précédentes pour calculer une valeur caractéristique (Absolutes Beschleunigungspotential-nach Hochschalten-Kennwert),

**caractérisé en ce que**

le premier état de déplacement est spécifié pour le véhicule,
que la puissance d'entraînement pouvant être appelée au maximum par l'unité d'entraînement est calculée pour le premier état de déplacement et qu'une accélération du véhicule pouvant être atteinte est déduite sur cette base, que l'accélération possible avec la puissance d'entraînement maximale de l'unité d'entraînement est calculée pour ladite première vitesse,
que l'accélération pouvant être atteinte et l'accélération possible sont comparées l'une à l'autre,
qu'une valeur caractéristique (Absolutes Beschleunigungspotential-nach Hochschalten-Kennwert) est déduite à partir de ladite comparaison pour le potentiel d'accélération absolu après le passage à la vitesse supérieure.

6. Procédé selon l'une quelconque des revendications précédentes, **caractérisé en ce que**

au moins une valeur caractéristique totale $DR_p$ est obtenue à partir d'au moins deux valeurs caractéristiques $DR_{final}$ ou $DR_{base}$ pour le dispositif de transmission,
que la valeur caractéristique totale est calculée par une obtention de somme à partir de n valeurs/valeurs caractéristiques individuelles,
qu'un potentiel p est appliqué sur les valeurs caractéristiques individuelles avec une fonction de pondération,
que la valeur caractéristique totale répond à la règle de calcul

$$DR_p(DR_1, DR_2, .. DR_n) = 11 - \left(\frac{1}{n}\sum_{i=1}^{n}(11 - DR_i)^p\right)^{\frac{1}{p}}$$

7. Procédé selon la revendication 8, **caractérisé en ce qu'**une valeur caractéristique globale $DR_{pg}$ est définie pour le dispositif de transmission à partir de l, au moins toutefois à partir de deux valeurs caractéristiques totales $DR_p$, et que la valeur caractéristique globale répond à la règle de calcul

$$DR_{pg} = 11 - \left(\frac{1}{\sum_{k=1}^{l} w_k} \cdot \sum_{k=1}^{l} w_k \cdot (11 - DR_k)^p\right)^{\frac{1}{p}}$$

.

8. Procédé selon l'une quelconque des revendications précédentes, **caractérisé en ce que**

au moins une valeur caractéristique, une valeur caractéristique totale ou une valeur caractéristique globale est prise en compte pour optimiser l'unité de transmission, et
que des paramètres du dispositif de transmission varient selon la méthode de l'évolution différentielle pour calculer ladite au moins une valeur caractéristique.

Fig. 1

Fig. 2

1 AP = 100% AP ┄┄┄┄┄┄┄┄┄┄┄┄┄┄┄┄┄┄┄┄┄┄

23 ⌐

21 ⌐　　25

20

24 ⌐

26

0 AP = | Ende der vertikalen
| Schaltlinie

22

$n_{Schalt\_min}$

$n_{max}$

## Fig. 3

Bewertung für Kriterium: Dauer in einem Gang nach Herunterschalten 4-3
(mit festgesetzter Hochschaltlinie)

Fahrzeuggeschwindigkeit [km/h]

Fig. 4

Korrelation des Pedals zur Beschleunigung

Fig. 5

3-2 Beschleunigungspotential bei eingelegten Gang vor dem Herunterschalten

4-3 Beschleunigungspotential bei eingelegten Gang vor dem Herunterschalten

5-4 Beschleunigungspotential bei eingelegten Gang vor dem Herunterschalten

6-5 Beschleunigungspotential bei eingelegten Gang vor dem Herunterschalten

7-6 Beschleunigungspotential bei eingelegten Gang vor dem Herunterschalten

Erwartete Beschleunigung [m/s²]

Fahrzeuggeschwindigkeit [km/h]

Fig. 6

36

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0846945 B1
- EP 0846945 A

- DE 10042146